# EUROPÄISCHE PATENTSCHRIFT

(11) **EP 2 605 908 B1**
(45) Veröffentlichungstag und Bekanntmachung des Hinweises auf die Patenterteilung: **11.11.2020**
(21) Anmeldenummer: 11743047.0
(22) Anmeldetag: 04.08.2011
(51) Int. Cl.: B32B 37/04, B32B 37/15, B29C 43/24, B32B 5/02

(54) **VERBUNDWERKSTOFF MIT BESCHICHTUNGSMATERIAL**
COMPOSITE MATERIAL WITH COATING MATERIAL
MATÉRIAU COMPOSITE COMPORTANT UN MATÉRIAU DE REVÊTEMENT

(30) Priorität: 11.04.2011 EP 11161918; 17.08.2010 EP 10173065
(43) Veröffentlichungstag der Anmeldung: 26.06.2013
(73) Patentinhaber: Low & Bonar Gmbh, 41836 Hückelhoven (DE)
(72) Erfinder: CALLHOFF, Christian Franz, 52062 Aachen (DE); KEULEN, Ellen, 52525 Heinsberg (DE); ERDMANN, Carina, 41836 Hückelhoven (DE)
(74) Vertreter: CPW GmbH
(86) Internationale Anmeldenummer: PCT/EP2011/063464
(87) Internationale Veröffentlichungsnummer: WO 2012/022626

(56) Entgegenhaltungen:
- EP-A1- 2 123 444
- EP-A2- 0 356 930
- DE-U1-202009 007 356
- US-A- 6 054 178
- US-A1- 2007 194 482
- US-A1- 2009 324 905
- US-B1- 6 533 884

## Beschreibung

Die Erfindung betrifft einen Verbundwerkstoff, der mindestens aus einem Trägermaterial besteht. Das Trägermaterial ist auf einer ersten Oberfläche mit einem ersten Beschichtungsmaterial und auf einer zweiten Oberfläche mit einem zweiten Beschichtungsmaterial beschichtet. Die Erfindung betrifft ebenso ein Verfahren zur Herstellung eines solchen Verbundwerkstoffes.

Beschichtete Verbundwerkstoffe sind allgemein bekannt. Verbundwerkstoffe weisen im Allgemeinen ein Trägermaterial auf, das einseitig oder beidseitig beschichtet ist. Je nach verwendetem Trägermaterial und Beschichtungsmaterial ist jedoch eine innige Haftung zwischen Trägermaterial und Beschichtungsmaterial nur schwer zu erreichen. In der Regel werden Haftvermittler eingesetzt. Das Trägermaterial kann dabei mit Hilfe eines beispielsweise chemischen Prozesses beschichtet werden. Hierzu wird in der Regel ein Haftvermittler auf das Trägermaterial aufgetragen und anschließend eine Beschichtung vorgenommen. Durch den Haftvermittler bildet das Trägermaterial, die Beschichtung und der Haftvermittler zusammen einen Verbundwerkstoff. Ein Nachteil bei der Verwendung von Haftvermittlern besteht darin, dass sich Bestandteile des Haftvermittlers aus dem Verbundwerkstoff lösen können. Außerdem muss der Haftvermittler in der Regel speziell an das verwendete Trägermaterial und das verwendete Beschichtungsmaterial angepasst werden. Kurzfristige Produktionsumstellungen sind somit nicht möglich.

Alternativ zur Verwendung eines Haftvermittlers kann das Trägermaterial beispielsweise auch durch eine sogenannte Corona-Behandlung vorbereitet werden, um die Haftung zwischen Trägermaterial und Beschichtungsmaterial zu verbessern. Nachteilig bei einer solchen Corona-Behandlung ist jedoch, dass die Wirkung der Behandlung nur kurzfristig ist, so dass die Beschichtung zeitlich direkt nach der Corona-Behandlung erfolgen muss. Hierdurch wird der Herstellungsprozess wenig flexibel und teuer. Insgesamt sind die bisher vorgeschlagenen Verfahren zur Erzeugung einer Haftung zwischen Trägermaterial und Beschichtungsmaterial aufwändig und teuer.

Derartige Nachteile der Produkte und ihrer Herstellverfahren kommen insbesondere bei großflächigen Anwendungen von beschichteten Verbundwerkstoffen zum Tragen, wie beispielsweise bei Anwendungen im Bereich der textilen Architektur. Anwendungen im Bereich der textilen Architektur sind z.B. Verbundwerkstoffe bzw. Membranen und insbesondere beschichtete Gewebe für Überdachungen, Zwischendecken, Unterhangdecken, Industriehallen, Taglufthallen oder Veranstaltungszelte, oder auch Behälter, Silos, Tanks usw.. Vor allem bei solchen großflächigen Anwendungen kommt es letztlich im Hinblick auf die extremen Zug- und Druckkräfte beispielsweise bei unter Spannung stehenden Konstruktionen auf eine hohe Reißkraft, insbesondere auf eine hohe Weiterreißfestigkeit und auf eine gute Verschweißbarkeit der Bahnen an, wofür eine hohe Haftfestigkeit zwischen textilem Träger und Beschichtung eine wichtige Voraussetzung ist.

Gerade bei der Herstellung z.B. großflächiger beschichteter Gewebe wird eine Corona-Behandlung sehr aufwändig. Andererseits spielt bei großflächigen Anwendungen im Bereich der textilen Architektur die Migration von Haftvermittlern und eventuell von weiteren Additiven eine signifikante Rolle, zumal die beschichteten Verbundwerkstoffe bei derartigen Anwendungen insbesondere auch z.T. aggressiven Umwelt- und/oder Lichteinflüssen ausgesetzt sind. Bei Anwendungen im Bereich der Lebensmitteltechnologie wie beispielsweise bei Behältern für Lebensmittel aus einem beschichteten Gewebe kann sich negativ auswirken, wenn z.B. ein Haftvermittler oder Bestandteile eines Haftvermittlers an die Oberfläche des beschichteten Gewebes migriert und von dort an das Lebensmittel abgegeben wird.

US 2007/194482A1 offenbart ein Verfahren zur Herstellung eines mehrschichtigen Verbundmaterials, z.B. für Bedachungen durch Koextrusion der verschiedenen Schichten, wobei das Material eine Verstärkung durch ein textiles Gebilde aufweisen kann.

DE 20 2009 007356 U1 offenbart ein Laminat bestehend aus einer textilen Basisschicht und zwei dünnen Folienschichten, wobei die Folienschichten durch Aufschmelzen durch die textile Basisschicht hindurch miteinander verklebt werden.

US 6 054 178 A offenbart ein Herstellungsverfahren zur Herstellung einer durch ein Gewebe oder ein Gestrick verstärkten Polymerfolie, die durch Extrudieren des Polymers um das Textilmaterial herum erhalten wird.

US 4 702 948 A offenbart ein doppelseitiges Klebeband auf Gewebebasis, wobei eine Seite in einer uniformen Schicht mit dem Klebstoff beschichtet ist, die andere Seite aber nur eine oberflächliche Beschichtung aufweist.

Es war daher die Aufgabe der vorliegenden Erfindung, einen Verbundwerkstoff insbesondere auch für großflächige Anwendungen oder auch für Anwendungen im Bereich der Lebensmitteltechnologie bereitzustellen, bei dem eine gute Haftung zwischen dem Trägermaterial und dem Beschichtungsmaterial gewährleistet wird, ohne dass er die zuvor beschriebenen Nachteile aufweist.

Die Aufgabe wird gelöst durch einen Verbundwerkstoff gemäß Anspruch 1.

Durch das erste Beschichtungsmaterial entsteht auf der ersten Oberfläche des Trägermaterials eine erste Beschichtungslage, die in vorteilhafter Weise durch die Stege mit einer zweiten Beschichtungslage (gebildet durch das zweite Beschichtungsmaterial) verbunden ist. Das Trägermaterial liegt folglich zwischen den beiden Beschichtungslagen und wird von dem Beschichtungsmaterial (durch die Stege) zumindest teilweise durchdrungen. Hierdurch sind Trägermaterial und Beschichtungsmaterial innig miteinander vermengt, ohne dass zusätzliche Klebemittel, Haftvermittler oder Corona-Behandlungen benötigt würden. Demnach wird die innige Verbindung von Trägermaterial und Beschichtungsmaterial auch für Verbundwerkstoffe erhalten, die frei von zum Beispiel Klebemitteln oder Haftvermittlern sind. Zusätzlich hat die Erfindung den Vorteil, dass durch die Stege innerhalb des Trägermaterials das Trägermaterial stabilisiert wird. Beispielsweise wird das Trägermaterial durch die Stege daran gehindert, zu schrumpfen oder zu verkrimpen, wodurch beispielsweise die Abmessungen des Trägermaterials (beispielsweise Länge oder Breite des Trägermaterials) auch stabilisiert bleiben.

Wie bereits erwähnt, macht die Ausgangsfläche der von der ersten Oberfläche des Trägermaterials ausgehenden Stege 1% bis 90% der Fläche der ersten Oberfläche des Trägermaterials aus. Bevorzugt macht die Ausgangsfläche der von der ersten Oberfläche des Trägermaterials ausgehenden Stege 5% bis 70% der Fläche der ersten Oberfläche des Trägermaterials aus. Besonders bevorzugt macht die Ausgangsfläche der von der ersten Oberfläche des Trägermaterials ausgehenden Stege 10% bis 50% der Fläche der ersten Oberfläche des Trägermaterials aus und ganz besonders bevorzugt 25% bis 40%. Die Prozentangabe bezieht sich dabei auf das Flächenprozent (und nicht auf das Volumenprozent), und die zugrunde liegende Fläche ist die Oberfläche des Trägermaterials, die parallel zur Haupterstreckungsebene des Trägermaterials liegt. Als Ausgangsfläche der Stege wird die Fläche eines jeden Steges verstanden, der grade in das Trägermaterial hineinragt. Wird beispielsweise ein Trägermaterial so beschichtet, dass Stege entstehen und anschließend das Beschichtungsmaterial vollständig von der zuvor beschichteten Oberfläche entfernt, so werden die erzeugten Stege in der Draufsicht als Punkte sichtbar. Die sichtbaren Punkte bilden die Ausgangsfläche der Stege, da die Stege von ihnen ausgehen. Die Ausgangsfläche der Stege wird bevorzugt in einer Eindringtiefe von 0,1 mm innerhalb des Trägermaterials gemessen. Es versteht sich, dass sich die Ausgangsfläche der Stege durch Summieren der einzelnen Ausgangsflächen jedes einzelnen Steges ergibt. Vorzugsweise sind die Stege gleichmäßig über der Fläche des Trägermaterials verteilt, d.h. es treten keine größeren Flächen ohne Stege oder mit verringerter Anzahl von Stegen auf.

Die erste und die zweite Oberfläche des Trägermaterials liegen in etwa parallel zur Haupterstreckungsebene des Verbundwerkstoffes und einander gegenüber. Die Ebene, in der die Ausgangsfläche der Stege gemessen wird, liegt ebenfalls in etwa parallel zur Haupterstreckungsebene des Verbundwerkstoffes und zwischen den beiden Oberflächen des Trägermaterials.

Gemäß der Erfindung sind mindestens 20 und bis zu 90% der Stege so ausgebildet, dass sie von der ersten Oberfläche des Trägermaterials zur zweiten Oberfläche des Trägermaterials reichen. Besonders bevorzugt reichen mindestens 40 % und ganz besonders bevorzugt mindestens 50 % aller Stege von der ersten Oberfläche des Trägermaterials zur zweiten Oberfläche des Trägermaterials. Die Stege, die von der ersten Oberfläche des Trägermaterials bis zur zweiten Oberfläche des Trägermaterials reichen, verbinden bevorzugt die erste Beschichtungslage mit der zweiten Beschichtungslage. Folglich verläuft der Steg ausgehend von der ersten Beschichtungslage innerhalb des Trägermaterials zur zweiten Beschichtungslage und ist dabei auch mit der zweiten Beschichtungslage verbunden.

Die erste Oberfläche des Trägermaterials und/oder die zweite Oberfläche des Trägermaterials ist bevorzugt zu 45 bis 100% durch das erste und/oder zweite Beschichtungsmaterial beschichtet. Besonders bevorzugt ist die erste Oberfläche des Trägermaterials und/oder die zweite Oberfläche des Trägermaterials zu 60 bis 95%, ganz besonders bevorzugt zu 70 bis 90%, durch das erste und/oder zweite Beschichtungsmaterial beschichtet.

Bevorzugt besteht das Trägermaterial aus mindestens einem Gewebe, einem Gewirk, einem Gedrebe, einem Gitter oder einem Vlies. Das Trägermaterial ist ganz besonders bevorzugt ein Gewebe, wobei das Gewebe vorzugsweise eine Köper-, Leinwand-, Panama- oder eine Atlasbindung aufweist. Das Trägermaterial kann einlagig oder mehrlagig sein, wobei das Trägermaterial einlagig oder mehrlagig die zuvor genannten Bindungen aufweisen kann. Beispielsweise kann das Trägermaterial mehrlagig aufgebaut sein und aus mindestens zwei Gewebelagen oder einer Gewebelage und einer Gedrebelage bestehen.

Unter dem Begriff Faser sollen sowohl Endlosfasern als auch Stapelfasern oder Kurzfasern verstanden werden. Die Fasern können sowohl zu einem Multifilamentgarn als auch zu einem Monofilamentgarn gehören. In einer bevorzugten Ausführungsform des erfindungsgemäßen Verbundwerkstoffs handelt es sich bei den Fasern des Trägermaterials um solche aus Polyester, Polyolefinen, wie z.B. Polyethylen, Polytetrafluorethylen, aromatischen Polyaramiden oder Kohlenstofffasern. Besonders bevorzugt sind hochfeste Fasern wie z.B. Aramidfasern, welche z.B. unter den Handelsnamen Twaron (Fa. Teijin Aramid) oder Kevlar (Fa. Du Pont) erhältlich sind, oder hochfeste Polyethylenfasern, wie sie z.B. unter den Handelsnamen Dyneema (Fa. DSM B.V.) oder Spectra (Fa. Honeywell International) erhältlich sind. Insbesondere sind auch solche Fasern zu nennen, die zwar über eine hohe Festigkeit verfügen, die jedoch nur eine eingeschränkte Temperaturstabilität aufweisen, wie z.B. die hochfesten Polyethylenfasern, die bereits bei Temperaturen oberhalb von ca. 140°C aus einem teilkristallinen in einen amorphen Zustand übergehen und dadurch ihre hohe Festigkeit einbüßen.

Vorzugsweise besteht die erste Beschichtungslage und die zweite Beschichtungslage aus dem gleichen Beschichtungsmaterial. Das bedeutet, dass das erste Beschichtungsmaterial und das zweite Beschichtungsmaterial das gleiche Material ist. Als Beschichtungsmaterial für die erste Beschichtungslage und/oder die zweite Beschichtungslage können Polyvinylchlorid, Polyolefin-Homopolymere, wie zum Beispiel Polyethylen oder Polypropylen, oder Polyolefin-Copolymere, wie z.B. metallocene Plastomere, des weiteren Polyurethan, Alcryn, Silikon, Acrylat und/oder beliebige Mischungen aus den eben genannten Materialien eingesetzt werden. Besonders bevorzugt besteht die erste und/oder die zweite Beschichtungslage im Wesentlichen vollständig aus Polyvinylchlorid, Polyolefin-Homopolymeren, Polyolefin-Copolymeren, wie z.B. sogenannten metallocenen Plastomeren, und/oder Polyurethan. Unter metallocenen Plastomeren sind solche Plastomere zu verstehen, die unter Verwendung von metallocenen Katalysatoren hergestellt wurden. Plastomere sind dabei Materialien, die sowohl thermoplastische Eigenschaften als auch elastomere Eigenschaften aufweisen. Ein Beispiel für ein solches Plastomer ist ein spezielles, unter dem Namen Exact von der Fa. Dexplastomers vertriebene Niederdruck-Polyethylen-Copolymer. Besonders bevorzugt sind als Beschichtung Plastomere, die eine gute Festigkeit und eine gute Flexibilität aufweisen, ohne dass Additive wie z.B. Weichmacher zugesetzt werden müssen.

Von besonderem Vorteil insbesondere für Anwendungen im Bereich der textilen Architektur werden als Beschichtungsmaterial Polyolefin-Copolymere, d.h. metallocene Plastomere mit einer hohen Flexibilität eingesetzt. In diesem Falle weisen die als Beschichtungsmaterial eingesetzten metallocenen Plastomere vorzugsweise einen nach ISO 178 ermittelten Biegemodul von höchstens 50 MPa und besonders bevorzugt von höchstens 30 MP auf. Für Einsatzzwecke im Bereich der textilen Architektur hervorragend geeignet sind Octen-1 Plastomere, die unter dem Handelsnamen Exact 8210 (Fa. DEXPlastomers) erhältlich sind.

Die erste und/oder die zweite Beschichtungslage können einlagig oder mehrlagig (Multilayer-Struktur) aufgebaut sein. Bei einem mehrlagigen Aufbau der ersten und/oder zweiten Beschichtungslage ist die Beschichtungslage (erste und/oder zweite Beschichtungslage) aus mehr als einer Lage aufgebaut. Jede Lage kann dabei aus unterschiedlichen Beschichtungsmaterialien bestehen oder die Lagen bestehen aus dem gleichen Beschichtungsmaterial. Zusätzlich oder alternativ hierzu kann die Beschichtungslage bei einem mehrlagigen Aufbau und bei einem einlagigen Aufbau auch eine zusätzliche Schicht aufweisen. Die zusätzliche Schicht kann beispielsweise eine Schutzschicht für die Beschichtungslage sein, welche die Beschichtungslage vor Feuchtigkeit, Pilzbefall, Insektizidbefall und/oder Schmutz schützen soll. Die Schutzschicht besteht bevorzugt nicht aus einem normalen Beschichtungsmaterial, wie es für die erste und/oder die zweite Beschichtungsschicht verwendet wird. Die Lackierung einer Beschichtungslage, so dass eine Lackschicht auf der Beschichtungslage entsteht, ist ein Beispiel für eine Schutzschicht.

Eine Beschichtungslage, die im Wesentlichen aus nur einem Material besteht, besteht bevorzugt zu über 40%, besonders bevorzugt zu über 70% und ganz besonders bevorzugt zu über 95%, aus dem genannten Material.

Die erste und/oder die zweite Beschichtungslage kann flammfest ausgerüstet und/oder farbig ausgebildet sein. Weiterhin ist es denkbar, dass die erste und/oder die zweite Beschichtungslage besondere haptische Eigenschaften, wie z.B. eine Strukturierung, aufweist. Auch besondere wärmeleitende oder wärmeisolierende Eigenschaften sind für die erste und/oder zweite Beschichtungslage möglich.

Bevorzugt werden die Stege aus Beschichtungsmaterial an Durchlässen des Trägermaterials ausgebildet. Unter einem Durchlass soll beispielsweise eine Gewebelücke verstanden werden, die auf Grund der Gewebebindung regelmäßig in einem Gewebe als Trägermaterial vorkommt, zum Beispiel zwischen Kett- und Schussfäden bei Geweben. Bei einem Gewirk sind solche Durchlässe beispielsweise die Lücken zwischen Maschen, die im Gewirke vorkommen. Bei einem Vlies ergeben sich die Durchlässe durch Bereiche im Vlies, in denen Fasern weniger oder überhaupt nicht übereinander liegen.

Vorzugsweise weist der erfindungsgemäße Verbundwerkstoff in zwei aufeinander senkrecht stehenden Richtungen seiner flächigen Erstreckung eine Länge im Bereich von 0,8 bis 3,5 m und bevorzugt im Bereich von 1 bis 3,2 m auf. Im Falle eines bahnförmigen Verbundwerkstoffs mit einer Laufrichtung bzw. Produktionsrichtung und einer Querrichtung, wie z.B. bei einem beschichteten Gewebe, Gedrebe usw., liegt die Erstreckung in Querrichtung dann bevorzugt im Bereich von 0,8 bis 3,5 m und bevorzugt im Bereich von 1 bis 3,2 m. Im Falle eines beschichteten Gewebes entspricht z.B. die Querrichtung der Richtung der Schussfäden. Mit derartigen Verbundwerkstoffen lassen sich Anwendungen im Bereich der textilen Architektur problemlos realisieren.

Ein weiterer Gegenstand der vorliegenden Erfindung ist ein Verfahren zur Herstellung eines Verbundwerkstoffes gemäß Anspruch 10.

Für die im vorliegenden Verfahren eingesetzten Ausgangsmaterialien sowie für den durch das Verfahren herzustellenden Verbundwerkstoff gelten die gleichen Definitionen und Ausführungen beispielsweise zum Trägermaterial oder zu den Beschichtungsmaterialien wie bereits zuvor im Zusammenhang mit dem erfindungsgemäßen Verbundwerkstoff beschrieben.

Das erste und/oder das zweite Beschichtungsmaterial wird im vorliegenden Verfahren durch einen Kalander auf das Trägermaterial aufgebracht. Bevorzugt wird das erste und/oder das zweite Beschichtungsmaterial durch einen Schmelzwalzenkalander auf das Trägermaterial aufgebracht.

Unter Kalandrieren soll im Rahmen der vorliegenden Erfindung ein Prozess verstanden werden, bei dem eine Schmelze oder eine Paste eines sich oberhalb seiner Erweichungstemperatur befindenden Polymermaterials durch einen Spalt eines Systems aus mehreren beheizten und polierten Walzen hindurchgeführt wird. Beim Kalandriervorgang wird eine Schicht aus der Schmelze erzeugt (Beschichtungsschicht) und diese Beschichtungsschicht im Schmelzezustand vorzugsweise ohne eine zwischenzeitliche Abkühlung auf ein Trägermaterial aufgetragen. Dabei wird im Rahmen der vorliegenden Erfindung unter einer Schmelze zum einen ein Polymermaterial verstanden, das sich oberhalb seiner Schmelztemperatur in einem flüssigen Aggregatzustand befindet. Es wird des Weiteren darunter aber auch ein Polymermaterial verstanden, das sich oberhalb seiner Erweichungstemperatur in einem flüssigen, pastenartigen Aggregatzustand befindet. Letzteres findet beispielsweise Anwendung für Beschichtungsmaterialien, die zwar eine Erweichungstemperatur aufweisen, die sich im Bereich der ihrer Schmelztemperatur jedoch bereits zersetzen, wie dies z.B. bei Beschichtungsmaterialien auf Basis weichgemachter Polyvinylchloride der Fall ist. Demzufolge wird im Rahmen der vorliegenden Erfindung unter schmelzeflüssig auch pastenartig bzw. unter einem schmelzeflüssigen Zustand auch ein pastenartiger Zustand verstanden. Somit wird im Rahmen der vorliegenden Erfindung unter einem schmelzeflüssigen Zustand des ersten bzw. zweiten Beschichtungsmaterials der Zustand verstanden, den das erste bzw. zweite Beschichtungsmaterial bei Temperaturen oberhalb seiner Erweichungstemperatur aufweist.

Im Unterschied zum Kalandrierverfahren wird bei einem Laminiervorgang beispielsweise eine bereits fertige Schicht (z.B. eine Folie) mittels eines Klebers aufgebracht. Die Ausbildung von Stegen innerhalb eines Trägermaterials ist mittels eines Laminiervorgangs nicht möglich. Durch die Verwendung einer bereits fertigen Schicht, also z.B. einer Folie, die bei einem Laminiervorgang auf ein Trägermaterial aufgebracht wird, kann diese Schicht nicht so in das Trägermaterial eindringen, dass Stege gebildet werden, die eine Verbindung zwischen Schicht und Trägerschicht bewirken würden.

Im Rahmen der vorliegenden Erfindung können Kalander bzw. Schmelzwalzenkalanderanordnungen eingesetzt werden, wie sie im Prinzip in der Kunststoffverarbeitung verwendet werden und die mehrere parallel liegenden rotierenden Walzen bzw. Walzenpaare aufweisen können. Das Verfahren der vorliegenden Erfindung umfasst die folgenden Verfahrensschritte:
- Vorlegen eines bahnförmigen Trägermaterials in einer Schmelzwalzenkalanderanordnung, umfassend einen ersten und einen zweiten Beschichtungskalander,
- Vorlegen eines ersten Beschichtungsmaterials und Überführen des ersten Beschichtungsmaterials bei einer Temperatur oberhalb seiner Erweichungstemperatur in einen schmelzeflüssigen Zustand
- Erzeugen einer schmelzeflüssigen Bahn des ersten Beschichtungsmaterials,
- Hindurchführen der Bahn des ersten Beschichtungsmaterials im schmelzeflüssigen Zustand zusammen mit dem bahnförmigen Trägermaterial und auf der ersten Oberfläche des Trägermaterials durch den Spalt des ersten Beschichtungskalanders, wodurch das erste Beschichtungsmaterial auf der ersten Oberfläche des Trägermaterials aufgetragen wird und infolge des im Spalt des ersten Beschichtungskalanders ausgeübten Drucks das erste Beschichtungsmaterial und das Trägermaterial eine innige Verbindung eingehen,
- Vorlegen eines zweiten Beschichtungsmaterials und Überführen des zweiten Beschichtungsmaterials bei einer Temperatur oberhalb seiner Erweichungstemperatur in einen schmelzeflüssigen Zustand,
- Erzeugen einer schmelzeflüssigen Bahn des zweiten Beschichtungsmaterials,
- Hindurchführen der Bahn des zweiten Beschichtungsmaterials im schmelzeflüssigen Zustand zusammen mit dem bahnförmigen Trägermaterial und auf der zweiten Oberfläche des Trägermaterials durch den Spalt des zweiten Beschichtungskalanders, wodurch das zweite Beschichtungsmaterial auf der zweiten Oberfläche des Trägermaterials aufgetragen wird und infolge des im Spalt des zweiten Beschichtungskalanders ausgeübten Drucks das zweite Beschichtungsmaterial und das Trägermaterial eine innige Verbindung eingehen,
   wobei die Temperatur des ersten Beschichtungsmaterials und/oder des zweiten Beschichtungsmaterials und der Druck im Spalt des ersten und/oder zweiten Beschichtungskalanders so eingestellt werden, dass das erste Beschichtungsmaterial und/oder das zweite Beschichtungsmaterial von der einen Oberfläche des Trägermaterials zur anderen Oberfläche des Trägermaterials durch das Trägermaterial fließt und dabei Stege innerhalb des Trägermaterials ausgebildet werden und eine Ausgangsfläche der Stege gebildet wird, die von der ersten Oberfläche des Trägermaterials ausgehen, wobei die Ausgangsfläche 1 bis 90 % der Fläche der ersten Oberfläche ausmacht.

In einer weiteren bevorzugten Ausführungsform des Verfahrens wird das erste Beschichtungsmaterial bei einer Temperatur oberhalb der Erweichungstemperatur des ersten Beschichtungsmaterials in einen schmelzeflüssigen Zustand überführt und durch Hindurchführen durch den Spalt zwischen den rotierenden Walzen eines ersten beheizten Walzenpaars eine plastische bzw. schmelzeflüssige Bahn des ersten Beschichtungsmaterials hergestellt. Diese Bahn des ersten Beschichtungsmaterials wird mittels einer oder mehrerer beheizter Walzen in den Spalt des ersten Beschichtungskalanders transferiert und im noch schmelzeflüssigen Zustand zusammen mit dem bahnförmigen Trägermaterial und auf der ersten Oberfläche des Trägermaterials durch diesen Walzenspalt geführt. Ebenso wird ein zweites Beschichtungsmaterial bei einer Temperatur oberhalb der Erweichungstemperatur des zweiten Beschichtungsmaterials in einen plastischen oder schmelzeflüssigen Zustand überführt und durch Hindurchführen durch den Spalt zwischen den rotierenden Walzen eines zweiten beheizten Walzenpaars eine plastische oder schmelzeflüssige Bahn des zweiten Beschichtungsmaterials hergestellt. Diese Bahn des zweiten Beschichtungsmaterials wird mittels einer oder mehrerer beheizter Walzen in den Spalt eines zweiten Beschichtungskalanders transferiert und im noch plastischen bzw. schmelzeflüssigen Zustand zusammen mit dem bahnförmigen Trägermaterial und auf der zweiten Oberfläche des Trägermaterials durch diesen Walzenspalt geführt.

Die zuvor beschriebenen Walzen für den Transfer der Bahn des ersten bzw. zweiten Beschichtungsmaterials in den Spalt des jeweiligen Beschichtungskalanders können bevorzugt auch in Form mindestens eines weiteren Walzenpaares angeordnet sein, durch dessen Spalt die sich noch im plastischen bzw. schmelzeflüssigen Zustand befindliche Bahn des ersten bzw. zweiten Beschichtungsmaterials hindurchgeführt und in einer vorteilhaften Ausführungsform des Verfahrens in ihrer Dicke reduziert wird. In einer besonders bevorzugten Ausführungsform wird die Dicke der Bahn des ersten bzw. des zweiten Beschichtungsmaterials über mehrere hintereinander angeordnete Walzenpaare in ihrer Dicke reduziert. Derartige Anordnungen von Walzenpaaren können bevorzugt als Dreiwalzen-, Vierwalzen- oder Fünfwalzenkalander ausgeführt sein, wobei die Walzen im Falle von Vier- oder Fünfwalzenkalandern vorzugsweise in Z-Form angeordnet sein können. Ebenso sind Mehrwalzenkalander in I-, F- oder L-Anordnung möglich.

In einer weiteren vorteilhaften Ausgestaltung des Verfahrens wird ein erstes Beschichtungsmaterial bei einer Temperatur oberhalb der Erweichungstemperatur des ersten Beschichtungsmaterials in einen schmelzeflüssigen Zustand überführt und durch Hindurchführen durch den Spalt zwischen den rotierenden Walzen eines ersten beheizten Walzenpaars und gegebenenfalls, wie zuvor erläutert, weiterer Walzenpaare eine plastische bzw. schmelzeflüssige Bahn des ersten Beschichtungsmaterials hergestellt. Die Bahn des ersten Beschichtungsmaterials wird dann mittels einer Abnahmewalze auf die erste Oberfläche des bahnförmigen Trägermaterial transferiert und im noch schmelzeflüssigen Zustand auf die erste Oberfläche des Trägermaterials aufgetragen, bevor das auf seiner ersten Oberfläche mit der ersten Beschichtungsmaterial versehene bahnförmige Trägermaterial anschließend in den Spalt des ersten Beschichtungskalanders transferiert und dort infolge des im Spalt des ersten Beschichtungskalanders ausgeübten Drucks mit dem ersten Beschichtungsmaterial verbunden wird. Ebenso wird ein zweites Beschichtungsmaterial bei einer Temperatur oberhalb der Erweichungstemperatur des zweiten Beschichtungsmaterials in einen schmelzeflüssigen Zustand überführt und durch Hindurchführen durch den Spalt zwischen den rotierenden Walzen eines zweiten beheizten Walzenpaars und gegebenenfalls, wie zuvor erläutert, weiterer Walzenpaare eine plastische bzw. schmelzeflüssige Bahn des zweiten Beschichtungsmaterials hergestellt. Die Bahn des zweiten Beschichtungsmaterials wird dann mittels einer Abnahmewalze auf die zweite Oberfläche des an seiner ersten Oberfläche bereits mit dem ersten Beschichtungsmaterial beschichteten bahnförmigen Trägermaterial transferiert und im noch schmelzeflüssigen Zustand auf die zweite Oberfläche des Trägermaterials aufgetragen, bevor das dann auf seiner zweiten Oberfläche mit dem zweiten Beschichtungsmaterial versehene bahnförmige Trägermaterial anschließend in den Spalt eines zweiten Beschichtungskalanders transferiert und dort infolge des im Spalt des zweiten Beschichtungskalanders ausgeübten Drucks an seiner zweiten Oberfläche mit dem zweiten Beschichtungsmaterial verbunden wird.

In einer vorteilhaften Ausgestaltung des Verfahrens sind der erste Beschichtungskalander und der zweite Beschichtungskalander identisch und das bahnförmige Trägermaterial wird zunächst zusammen mit der Bahn des ersten Beschichtungsmaterials durch den Spalt eines einzigen Beschichtungskalanders hindurchgeführt, wodurch das erste Beschichtungsmaterial auf der ersten Oberfläche des Trägermaterials aufgetragen wird. In einem nachfolgenden Schritt des Verfahrens wird das mit dem ersten Beschichtungsmaterial beschichtete bahnförmige Trägermaterial zusammen mit der Bahn des zweiten Beschichtungsmaterials durch den Spalt des einzigen Beschichtungskalanders hindurchgeführt, wodurch das zweite Beschichtungsmaterial auf der zweiten Oberfläche des Trägermaterials aufgetragen wird.

In einer weiteren bevorzugten Ausgestaltung des Verfahrens werden das erste und/oder das zweite Beschichtungsmaterial im schmelzeflüssigen Zustand direkt in den Spalt des ersten bzw. zweiten Beschichtungskalanders zugeführt und dann im Spalt die schmelzeflüssige Bahn des ersten bzw. zweiten Beschichtungsmaterials erzeugt. Die Bahn des ersten bzw. des zweiten Beschichtungsmaterials durchläuft zusammen mit dem bahnförmigen Trägermaterial den Spalt des ersten bzw. zweiten Beschichtungskalanders. In einer Ausgestaltung kann zunächst im Spalt des ersten Beschichtungskalanders das erste Beschichtungsmaterial auf der ersten Oberfläche des Trägermaterials aufgebracht und nachfolgend im Spalt des zweiten Beschichtungskalanders das zweite Beschichtungsmaterial auf der zweiten Oberfläche des Trägermaterials aufgebracht werden.

In einer weiteren Ausgestaltung können der erste und der zweite Beschichtungskalander bzw. der Spalt des ersten Beschichtungskalanders und der Spalt des zweiten Beschichtungskalanders identisch sein, wobei dann das erste Beschichtungsmaterial und das zweite Beschichtungsmaterial gleichzeitig in dem Spalt zwischen dem einzigen Beschichtungskalander auf der ersten bzw. zweiten Oberfläche des Trägermaterials aufgebracht werden können. Ebenso ist es auch möglich, dass im Spalt des einzigen Beschichtungskalanders zunächst das bahnförmige Trägermaterial im Spalt des Beschichtungskalanders auf der ersten Oberfläche mit dem ersten Beschichtungsmaterial beschichtet wird und anschließend das einseitig beschichtete Trägermaterial dem Prozess wieder vorgelegt und im Spalt des Beschichtungskalanders auf der zweiten Oberfläche mit dem zweiten Beschichtungsmaterial beschichtet wird.

Das Verfahren umfasst darüber hinaus auch Varianten und Kombinationen der zuvor ausgeführten Verfahrensausführungen. Beispielsweise kann die Bahn des ersten Beschichtungsmaterials separat über ein beheiztes Walzenpaar erzeugt und dann mit dem Trägermaterial zusammengeführt werden, während die Bahn des zweiten Beschichtungsmaterials im Spalt des Beschichtungskalanders erzeugt wird. Dabei kann die Beschichtung des bahnförmigen Trägermaterials mit dem ersten und dem zweiten Beschichtungsmaterial gleichzeitig auf den beiden Seiten des Trägermaterials erfolgen oder auch in aufeinanderfolgenden Verfahrensschritten.

Das erste bzw. das zweite Beschichtungsmaterial kann z.B. einem Extruder vorgelegt werden und im Extruder auf eine Temperatur oberhalb der Erweichungstemperatur erhitzt und das Beschichtungsmaterial in eine homogene Schmelze überführt werden. Diese Schmelze, worunter auch, wie ausgeführt wurde, eine sich oberhalb der Erweichungstemperatur des Beschichtungsmaterials befindliche Paste zu verstehen ist, wird dann entweder dem Spalt eines beheizten Walzenpaares oder dem Spalt des Beschichtungskalanders zugeführt und daraus die erforderliche Bahn des Beschichtungsmaterials hergestellt.

Im Rahmen der vorliegenden Erfindung wird unter der Erweichungstemperatur wird die sogenannte Vicat-Erweichungstemperatur VST = Vicat Softening Temperature) verstanden, die nach der Norm DIN EN ISO 306 ermittelt wird. Hierbei wird auf die VST/B50 zurückgegriffen.

Vorzugsweise sorgt der bzw. sorgen die Beschichtungskalander somit im vorliegenden Verfahren für das Aufbringen des ersten und/oder des zweiten Beschichtungsmaterials und auch dafür, dass zumindest ein Beschichtungsmaterial (also das erste oder das zweite Beschichtungsmaterial) durch das Trägermaterial durchgepresst wird und mit dem ersten beziehungsweise dem zweiten Beschichtungsmaterial in Kontakt tritt. Nach Aufbringen des ersten Beschichtungsmaterials und des zweiten Beschichtungsmaterials wird das beschichtete Trägermaterial vom zuletzt verwendeten Beschichtungskalander abgezogen und anschließend z.B. mittels einer Kühlwalze abgekühlt.

In einer bevorzugten Ausgestaltung des Verfahrens werden das erste und/oder das zweite Beschichtungsmaterial mindestens bis zur der Hälfte der Wegstrecke zwischen der ersten Oberfläche und der zweiten Oberfläche durch das Trägermaterial gedrückt. Dabei ist bevorzugt, wenn das erste und/oder das zweite Beschichtungsmaterial mindestens bis zu zwei Dritteln der Wegstrecke zwischen der ersten Oberfläche und der zweiten Oberfläche durch das Trägermaterial gedrückt werden. Ganz besonders bevorzugt werden die zu bildenden Stege vollständig durch das Trägermaterial gedrückt.

Es ist von Vorteil, wenn sowohl das erste als auch das zweite Beschichtungsmaterial durch das Kalandrieren durch das Trägermaterial gepresst werden. Durch das Durchdrücken des ersten und/oder des zweiten Beschichtungsmaterials durch das Trägermaterial gelangt bevorzugt das erste oder das zweite Beschichtungsmaterial mit dem jeweils anderen Beschichtungsmaterial in Kontakt, und die Stege werden ausgebildet. Hierdurch sind dann die beiden Beschichtungsschichten auf den beiden Oberseiten des Trägermaterials durch die Stege aus Beschichtungsmaterial, die durch das Trägermaterial gehen, miteinander verbunden. In einem Sonderfall kann es jedoch auch so sein, dass Stege entstehen, wenn das erste und/oder das zweite Beschichtungsmaterial nicht soweit in das Trägermaterial hineingedrückt werden, dass sie miteinander in Kontakt stehen. Beispielsweise kann sowohl das erste als auch das zweite Beschichtungsmaterial jeweils zu einem Drittel der Wegstrecke zwischen der ersten Oberfläche und der zweiten Oberfläche in das Trägermaterial hineingedrückt worden sein. Die beiden Beschichtungsmaterialien stehen somit nicht miteinander in Kontakt und trotzdem entsteht eine Haftung zwischen dem Beschichtungsmaterial und dem Trägermaterial, weil das Beschichtungsmaterial in das Trägermaterial hineingreift.

Das erfindungsgemäße Verfahren bietet den Vorteil, dass hohe Drücke aufgebracht werden können, um eine innige Verbindung von Träger- und Beschichtungsmaterial zu erzielen. Hierdurch lässt sich das Verfahren auch mit relativ hochviskosen Schmelzen des Beschichtungsmaterials durchführen, was andererseits bedeutet, dass die Verarbeitungstemperaturen relativ gering bleiben können. Gleichzeitig können die Verweilzeiten, die benötigt werden, um die für die innige Verbindung erforderliche plastische Verformung des Beschichtungsmaterials zu erzielen, relativ gering gehalten werden, was in Bezug auf eine möglichst geringe thermische Belastung des Trägermaterials und/oder des Beschichtungsmaterials von entscheidender Bedeutung ist.

Das erfindungsgemäße Verfahren ist damit vor allem auch zur Herstellung von Verbundwerkstoffen mit größerer Breite geeignet. In einer bevorzugten Ausführungsform des Verfahrens wird daher das bahnförmige Trägermaterial in einer Breite im Bereich von 0,5 bis 3,5 m und besonders bevorzugt in einer Breite von 1 bis 3,2 m Breite vorgelegt und mittels der Kalanderwalzenanordnung über mindestens 95% seiner Breite gleichmäßig mit den ersten und dem zweiten Beschichtungsmaterial beschichtet.

Bevorzugt wird für den Beschichtungsprozess eine relativ niedrige Temperatur verwendet. Niedrige Temperatur bedeutet hierbei, dass die Temperatur zur Vermeidung eines thermischen Abbaus des Beschichtungsmaterials möglichst wenig oberhalb der Erweichungstemperatur des Beschichtungsmaterials liegt, wobei die Temperatur dennoch so hoch gewählt wird, dass das Beschichtungsmaterial eine ausreichend niedrige Viskosität bekommt. Die Viskosität des Beschichtungsmaterials muss niedrig genug sein, um unter Druck durch das Trägermaterial fließen zu können. Des Weiteren ist bei der Einstellung der Temperatur zu berücksichtigen, dass aus dem jeweiligen Beschichtungsmaterial tatsächlich eine homogene Schmelze und daraus eine homogene Bahn erzeugt werden kann. In einer vorteilhaften Ausführung des Verfahrens weist das erste bzw. zweite Beschichtungsmaterial bei der Zusammenführung von erstem bzw. zweitem Beschichtungsmaterial mit dem bahnförmigen Trägermaterial eine Temperatur auf, die im Bereich von 20 bis 150 °C und besonders bevorzugt im Bereich zwischen 30 und 110 °C oberhalb der Erweichungstemperatur liegt, wobei die Temperatur gleichzeitig unterhalb der Zersetzungstemperatur des ersten bzw. des zweiten Beschichtungsmaterials liegt. Im Falle der bevorzugten Verwendung eines ersten und/oder eines zweiten Beschichtungsmaterials aus einem Polyolefin-Homopolymer oder einem Polyolefin-Copolymer liegt die Temperatur des ersten bzw. des zweiten Beschichtungsmaterials beim Kalandriervorgang bevorzugt zwischen 140 °C und 220 °C.

Vorzugsweise liegt auch die Temperatur der Kalanderwalzen zum Auftragen des ersten bzw. zweiten Beschichtungsmaterials auf das Trägermaterial 20 bis 150 °C und besonders bevorzugt im Bereich zwischen 30 und 110 °C oberhalb der Erweichungstemperatur des ersten bzw. des zweiten Beschichtungsmaterials wobei die Temperatur gleichzeitig unterhalb der Zersetzungstemperatur des ersten bzw. des zweiten Beschichtungsmaterials liegt. Dabei ist die Temperatur der Kalanderwalzen erfahrungsgemäß auf geringfügig unterschiedliche Temperaturen einzustellen, damit ein sicheres Abziehen des Produkts von den Walzen erfolgen kann. Die Schmelze aus Beschichtungsmaterial kann über das Kalandrieren auf das Trägermaterial übertragen werden. Durch anschließendes sofortiges Abkühlen des beschichteten Trägermaterials wird die gewünschte Form fixiert. Das erfindungsgemäße Verfahren bietet den Vorteil, dass die eingesetzten Träger- und Beschichtungsmaterialien nur kurzzeitig einer eventuell erforderlichen hohen Temperaturbelastung ausgesetzt werden. Damit können auch temperaturempfindliche Trägermaterialien bei vergleichsweise hohen Temperaturen beschichtet werden, ohne dass es im Beschichtungsverfahren zu einem Verlust der mechanischen Eigenschaften kommt. Beispielsweise sei auf die Beschichtung von Trägermaterialien aus hochfesten Polyethylengarnen mit polyolefinischen Beschichtungsmaterialien wie z.B. die zuvor genannten Niederdruck-Polyethylen-Copolymer (Plastomere) verwiesen. Mittels des erfindungsgemäßen Verfahrens kann für diese Materialkombination unter Verwendung von Schmelzwalzenkalandern bzw. Beschichtungskalandern ein erfindungsgemäßer Verbundwerkstoff hergestellt werden, ohne dass es zu einem Abbau der mechanischen Eigenschaften, d. h. insbesondere der Festigkeit des hochfesten Polyethylengarns kommt. Auch andere negative Erscheinungen im erhaltenen Verbundwerkstoff können vermieden werden, wie z.B. ein Walken der Garne des Trägermaterials, das zu Verwerfungen der Garne und zu einem Verkürzen der Garne bzw. der Breite des Verbundwerkstoffs führt.

Bevorzugt wird als erstes und/oder als zweites Beschichtungsmaterial ein Material verwendet, das einen MFR Wert (Melt Flow Rate) von etwa 2.16 kg/ 190°C beziehungsweise 2,16 kg /230°C aufweist.

Für einen Fachmann ist klar, dass das Fließverhalten des ersten und/oder zweiten Beschichtungsmaterials von verschiedenen Parametern, wie beispielsweise der Temperatur des ersten und/oder des zweiten Beschichtungsmaterials und dem Druck bei der Beschichtung abhängt. Durch die Angabe, dass das erste und/oder das zweite Beschichtungsmaterial Stege im Trägermaterial ausbilden sollen, ist dem Fachmann jedoch klar, wie er die entsprechenden Parameter in Abhängigkeit des zu verwendenden Materials wählen muss. Es ist klar, dass das erste und/oder das zweite Beschichtungsmaterial bei der Beschichtung eine Viskosität aufweisen muss, die es dem ersten und/oder zweiten Beschichtungsmaterial erlaubt, durch das Trägermaterial zu fließen, um Stege in diesem ausbilden zu können.

Vorzugsweise wird das beidseitig oder einseitig beschichtete Trägermaterial (Verbundwerkstoff) nach der Beschichtung einem Prägevorgang unterzogen. Dabei kann beispielsweise das einseitig beschichtete Trägermaterial zunächst einem Prägevorgang unterzogen werden und dann die noch unbeschichtete Seite beschichtet werden. Optional kann anschließend die neu beschichtete Oberfläche ebenfalls einen Prägevorgang durchlaufen. Alternativ hierzu kann das Trägermaterial aber auch zuerst beidseitig beschichtet werden und anschließend einseitig oder beidseitig in einem Prägevorgang geprägt werden.

Beim Prägevorgang wird das auf dem Trägermaterial aufgebrachte warme oder heiße Beschichtungsmaterial noch zusätzlich in das Trägermaterial hineingedrückt. Hierzu wird das Beschichtungsmaterial entweder erneut erwärmt oder das noch warme (heiße) Beschichtungsmaterial wird direkt nach der Beschichtung in das Trägermaterial gedrückt. Durch den Prägevorgang wird bevorzugt das erste Beschichtungsmaterial mit dem zweiten Beschichtungsmaterial vermengt. Bei den so entstandenen Stegen stehen das erste und/oder das zweite Beschichtungsmaterial nicht nur miteinander in Kontakt, sondern das erste und zweite Beschichtungsmaterial ist - zumindest an den Kontaktpunkten - miteinander verschmolzen oder vermengt. Durch den Prägevorgang wird folglich der Kontakt zwischen der Trägerschicht und der Beschichtungsschicht besonders innig, weil die Beschichtungsschicht die Trägerschicht zumindest teilweise einschließt.

Der Prägevorgang erfolgt bevorzugt unter Druck und Wärme. Beim Prägevorgang sollte die Temperatur hoch genug gewählt werden, damit das Beschichtungsmaterial zumindest im Inneren des Trägermaterials leicht anschmilzt. Auch hier soll also deutlich werden, dass die verwendete Temperatur und der verwendete Druck abhängig von dem ersten und zweiten Beschichtungsmaterial sind. Je nach Material des ersten und/oder zweiten Beschichtungsmaterials muss die Temperatur und der Druck entsprechend gewählt werden. Außerdem ist auch klar, dass bei höheren Temperaturen das Beschichtungsmaterial bei geringeren Drücken geprägt werden kann und umgekehrt. Hinsichtlich der dabei vorzugsweise einzustellenden Temperaturen gelten im Prinzip die bereits bzgl. der Temperaturen bei der Beschichtung gemachten Aussagen in gleicher Weise. Daher liegt auch die Temperatur beim Prägevorgang 20 bis 150 °C und besonders bevorzugt im Bereich zwischen 30 und 110 °C oberhalb der Erweichungstemperatur des ersten bzw. des zweiten Beschichtungsmaterials wobei die Temperatur gleichzeitig unterhalb der Zersetzungstemperatur des ersten bzw. des zweiten Beschichtungsmaterials liegt. Im Falle der bevorzugten Verwendung eines ersten und/oder eines zweiten Beschichtungsmaterials aus einem Polyolefin-Homopolymer oder einem Polyolefin-Copolymer liegt die Temperatur des ersten bzw. des zweiten Beschichtungsmaterials beim Kalandriervorgang bevorzugt zwischen 140 °C und 220 °C.

Bevorzugt erfolgt der Prägevorgang ebenfalls mit einem Kalander. Hierbei wird das bahnförmige Trägermaterial nach der Beschichtung mit dem ersten Beschichtungsmaterial und/oder nach der Beschichtung mit dem zweiten Beschichtungsmaterial bei erhöhten Temperaturen und unter Druck durch den Spalt eines Prägekalanderpaars geführt, wodurch das weitere Hineindrücken des ersten bzw. des zweiten Beschichtungsmaterials in das Trägermaterial bewirkt wird. Vorzugsweise weist dabei das Prägekalanderpaar die zuvor genannten Temperaturen auf. Bevorzugt wird auch im Spalt des Prägekalanders ein Liniendruck von mindestens 1,5 kN/mm eingestellt. Besonders bevorzugt beträgt der Liniendruck mindestens 2,5 kN/mm und ganz besonders bevorzugt mindestens 3 kN/mm. Vorzugsweise wird ein Liniendruck von 7 kN/mm nicht überschreiten. Für die Prägekalander können polierte, glatte und/oder strukturierte Kalanderwalzen verwendet werden. Vorzugsweise kann nach dem eben beschriebenen Prägevorgang auch ein Nachprägevorgang erfolgen. Der Nachprägevorgang kann ein erneuter Prägevorgang sein, oder ein Prägevorgang mit anderem Druck, anderen Temperaturen, anderen Verweilzeiten und/oder anderen Walzen als der bisher erfolgte Prägevorgang. Bei dem Prägevorgang können die Polymere der Beschichtungsmaterialien, sofern erforderlich, durch geeignete Wahl der Prozessbedingungen, wie Temperatur, Druck, Spannung und Geschwindigkeit, z.B. einer Quervernetzung unterzogen werden.

Durch die Verfahrenskombination von Schmelzwalzenkalandrierung und Prägevorgang können verschiedene Typen von Trägermaterial und Beschichtungsmaterial zusammengeführt und eine wesentliche Haftungsverbesserung erzielt werden. Wichtig ist es dabei, dass eine (Schmelzwalzen-) Kalandrierung und optional eine Prägung vorgenommen wird und keine Laminierung, denn die Laminierung beinhaltet das Verbinden von folienartigen Schichten und Trägermaterial mittels Klebstoffen. Besonders vorteilhaft ist, dass durch das erfindungsgemäße Verfahren zur Herstellung des Verbundwerkstoffes eine Stabilisierung der Gewebematrix von Kett- und Schussfäden durch das Beschichtungsmaterial erfolgt. Die niedrigviskose Schmelze setzt sich zwischen den Kreuzungspunkten (an Durchlässen) des Trägermaterials fest und verhindert so ein Zusammenziehen / Verkrumpfen oder Verkriechen des Garnmaterials, insbesondere z.B. bei Verwendung hochfester Polyethylen-Garne, wie beispielsweise von Dyneema-Garnen. Das Trägermaterial ist somit durch die Beschichtungsmaterialien eingebettet und fixiert.

Der Verbundwerkstoff weist bevorzugt ein Gesamtgewicht von 200 g/m² bis 2000 g/m² auf. Weiterhin bevorzugt weist der Verbundwerkstoff bevorzugt eine Gesamtdicke von 0,2 bis 2 mm auf, wobei die Beschichtungsdicke (einseitig, also nur erste oder nur zweite Beschichtungslage) vorzugsweise 0,1 bis 2 mm beträgt. Die Haftfestigkeit des Verbundwerkstoffes beträgt bevorzugt 10 bis 70 N/cm. Hierbei wird die Haftfestigkeit der Beschichtungen nach DIN EN ISO 2411:2000 ermittelt, wobei abweichend von der Norm die Probekörper nicht miteinander verklebt, sondern mittels Heißluft oder mittels Hochfrequenzschweißen miteinander verbunden werden.

Wenn als Trägermaterial ein Gewebe verwendet wird, beträgt die Gewebedicke bevorzugt 0,1 bis 1 mm. Das Gewebe ist bevorzugt aus einem hochfesten Polyethylengarn gewebt, wobei die Fadenstärke bevorzugt bei 440 bis 1670 dtex liegt. Als Gewebebindung können beispielsweise Dreherbindung, Leinwandbindung, Panamabindung, Köperbindung oder Atlasbindung eingesetzt werden. Die Reißkraft des Kettfadens beträgt bevorzugt 2000-6000N/50mm (nach DIN 53354). Die Reißkraft des Schussfadens beträgt bevorzugt 200-5500N/50mm (nach DIN 53363). Die Weitereißfestigkeit des Verbundwerkstoffs in Kette und in Schuss liegt nach DIN 53363 bei 200 bis 2000 N.

Die Erfindung wird im Folgenden anhand der Beispiele und Figuren näher beschrieben.
- Figur 1: stellt schematisch einen Verbundwerkstoff mit zwei Beschichtungsseiten dar.
- Figur 2: stellt schematisch ein Gewebe als ein Trägermaterial dar.
- Figur 3: stellt schematisch einen Verbundwerkstoff dar.
- Figur 4: stellt ein Mikroskopbild eines Ausschnittes eines einseitig beschichteten Trägermaterials dar.
- Figur 5: stellt ein Mikroskopbild eines Ausschnittes eines einseitig beschichteten Trägermaterials dar.
- Figur 6: stellt ein Mikroskopbild eines Ausschnittes eines einseitig beschichteten Trägermaterials in Seitenansicht dar.
- Figur 7: stellt ein Mikroskopbild eines Ausschnittes eines einseitig beschichteten Trägermaterials in Seitenansicht dar.

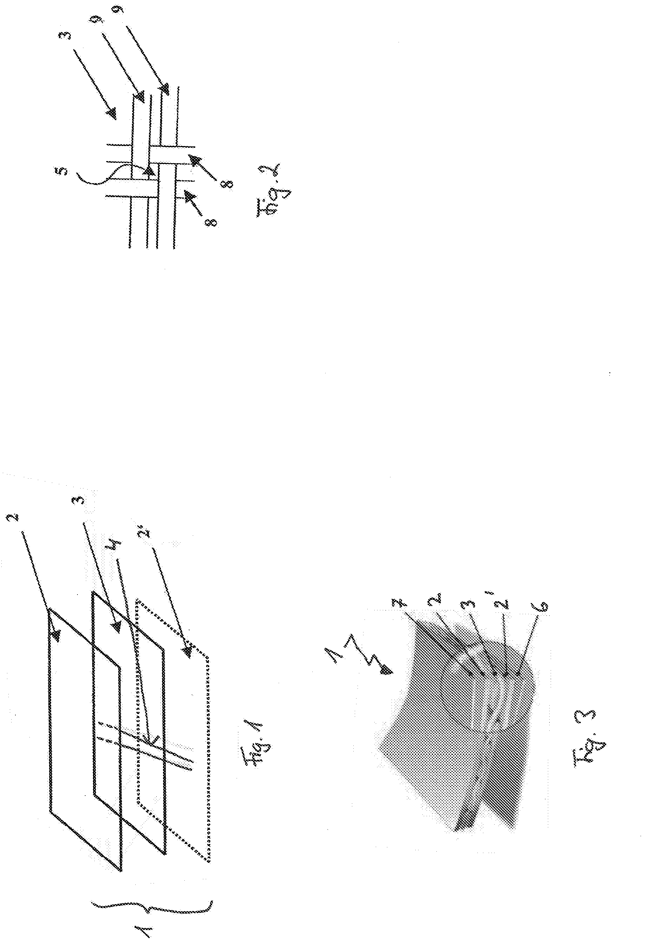

In Figur 1 ist schematisch ein Verbundwerkstoff 1 dargestellt, der im Beispiel der Figur 1 aus einer ersten Beschichtungslage 2 aus einem ersten Beschichtungsmaterial, einer zweiten Beschichtungslage 2' aus einem zweiten Beschichtungsmaterial und einem Trägermaterial 3 besteht. Die erste Beschichtungslage 2 ist über einen Steg 4 mit der zweiten Beschichtungslage 2' verbunden. Der Steg 4 besteht aus dem ersten und/oder dem zweiten Beschichtungsmaterial und verläuft durch das Trägermaterial 3. Die erste und die zweite Beschichtungslage 2, 2' bilden eine erste und zweite Oberfläche des Verbundwerkstoffes 1. 1 bis 90 % der ersten und/oder der zweiten Oberfläche des Verbundwerkstoffes weisen Stege 4 auf, die bevorzugt von der ersten Oberfläche zur zweiten Oberfläche des Trägermaterials 3 verlaufen. Bevorzugt mindestens 20% und bis 100% dieser Stege 4 verlaufen von der ersten Oberfläche bis zur zweiten Oberfläche, so dass die beiden Oberflächen miteinander durch die Stege 4 verbunden werden, wie auch in der Figur 1 dargestellt. Besonders bevorzugt verlaufen mindestens 50% und bis 70% und ganz besonders bevorzugt mindestens 80% und bis 90% der Stege 4 von der ersten Oberfläche bis zur zweiten Oberfläche, so dass eine durchgehende Verbindung zwischen dem ersten Beschichtungsmaterial 2 und dem zweiten Beschichtungsmaterial 2' entsteht.

In Figur 2 ist ein Gewebe 3 als Trägermaterial 3 dargestellt. Das Gewebe 3 weist Kettfäden 8 und Schussfäden 9 in einer Leinwandbindung auf. Zwischen den Kreuzungspunkten der Kett- und Schussfäden weist das Gewebe 3 Durchlässe 5 auf, die regelmäßig bzw. gleichmäßig über der Gewebefläche verteilt sind und in ihrer Häufigkeit von der Bindungsart und der Anzahl der Fäden pro Zentimeter abhängen. Bei der Herstellung des Verbundwerkstoffes wird beispielsweise ein Gewebe 3 wie in Figur 2 dargestellt, bei einer Schmelzwalzenkalandrierung zunächst auf der ersten Oberfläche und anschließend auf der zweiten Oberfläche des Gewebes 3 als Trägermaterial 3 mit einem ersten und einem zweiten Beschichtungsmaterial beschichtet, so dass eine erste Beschichtungslage 2 und eine zweite Beschichtungslage 2' gebildet werden. Bereits bei der Schmelzwalzenkalandrierung (oder auch nur bei einer Kalandrierung) gelangt das erste und/oder das zweite Beschichtungsmaterial in die Durchlässe 5, so dass Stege 4 ausgebildet werden. Wenn von jeder Oberseite des Trägermaterials 3 ausgehend Beschichtungsmaterial in Form von Schmelze bei der Kalandrierung in die Durchlässe 5 gelangt, wird entweder ein durchgehender Steg 4 - wie in Figur 1 gezeigt - gebildet, oder es entstehen zwei Stege, die von jeder Oberseite des Gewebes 3 in das Gewebe 3 hinein reichen. Bevorzugt ist die Bildung von durchgehenden Stegen 4. Das beschichtete Gewebe 3 kann bevorzugt nach der beidseitigen Beschichtung einem Prägevorgang unterzogen werden. Bei diesem Prägevorgang wird das beschichtete Gewebe 3 z.B. erneut erwärmt, so dass die Stege aus Beschichtungsmaterial und die Beschichtungslage 2 zumindest teilweise erneut schmelzen. Unter Druck wird dann das Beschichtungsmaterial erneut in das Gewebe 3 als Trägermaterial 3 gedrückt. Statt eines Prägevorgangs nach einem erneuten Aufschmelzen ist es natürlich auch möglich, dass nach der beidseitigen Beschichtung der Verbundwerkstoff direkt nach Verlassen der Beschichtungskalander und vor Abkühlung des Verbundwerkstoffs einem Prägevorgang unterzogen wird. Da die Stege 4 im Inneren des Trägermaterials 3 ebenfalls zumindest teilweise geschmolzen sind, vermengen sich die Beschichtungsmaterialien der ersten Oberseite des Trägermaterials und der zweiten Oberseite des Trägermaterials innerhalb der Stege 4. Selbst wenn also bei der Kalandrierung nur Stege 4 gebildet werden, die nicht bis zur gegenüberliegenden Oberseite des Trägermaterials 3 reichen, kann durch einen anschließenden Prägevorgang die Bildung von durchgehenden Stegen 4, wie in Figur 1 dargestellt, zumindest aber eine stärkere teilweise Einhüllung von z.B. Garnen des Trägermaterials erreicht werden.

In Figur 3 ist schematisch der Schichtaufbau eines Verbundwerkstoffes 1 grafisch dargestellt. Der Verbundwerkstoff 1 weist im Beispiel als Kern ein Gewebe 3 als Trägermaterial 3 auf. Das Trägermaterial 3 ist beidseitig beschichtet. Auf einer ersten Oberseite weist das Trägermaterial 3 daher eine vollflächige Beschichtungslage 2 aus einem ersten Beschichtungsmaterial auf. Auf einer zweiten Oberseite des Trägermaterials 3 weist das Trägermaterial 3 eine vollflächige Beschichtungslage 2' aus einem zweiten Beschichtungsmaterial auf. Die erste und die zweite Beschichtungslage 2, 2' weisen optional jeweils eine Schutzlage 6 und 7 auf. Die Schutzlagen 6,7 können beispielsweise Lackschichten sein, die den Verbundwerkstoff 1 vor Schmutz, Feuchtigkeit und/oder Insektizidbefall oder Pilzbefall schützen soll. Die erste Beschichtungslage 2 und die zweite Beschichtungslage 2' können aus dem gleichen Beschichtungsmaterial aufgebaut sein. Ebenso kann auch die erste Schutzlage 7 und die zweite Schutzlage 6 aus dem gleichen Schutzmaterial aufgebaut sein. Der Verbundwerkstoff 1 kann beispielsweise für textile Architektur, textiles Bauen, für Lebensmittelbehälter, Brauchbehälter, Dachware und als Material in der Luft- und Raumfahrtindustrie eingesetzt werden.

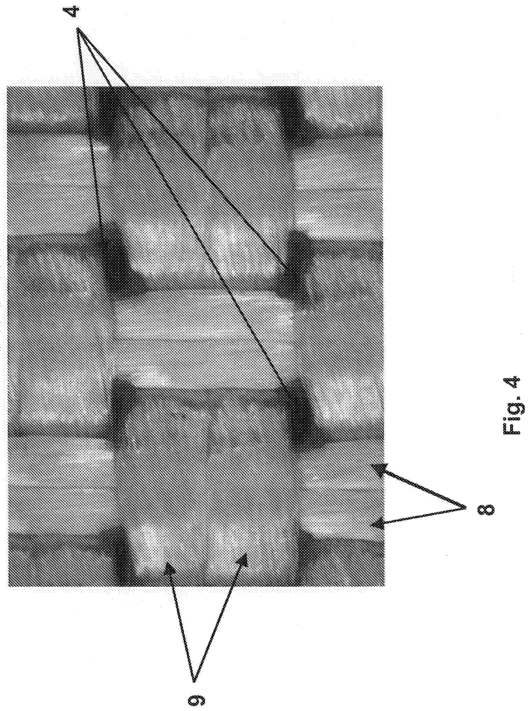

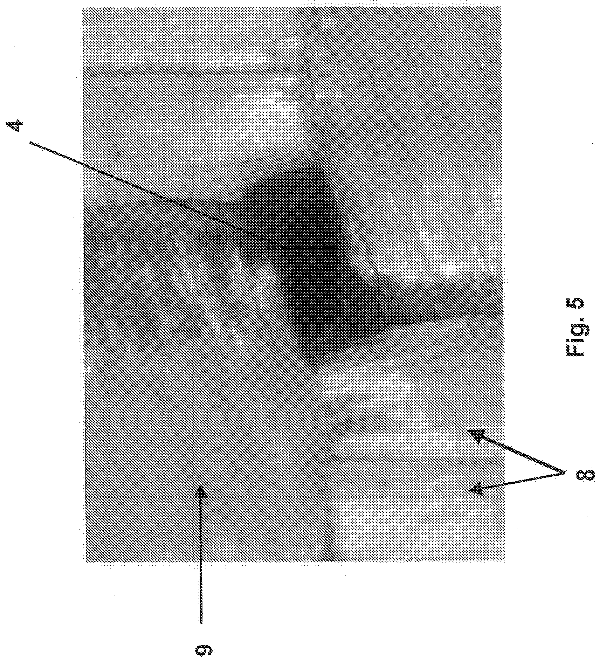

In Figur 4 und in Figur 5 ist jeweils eine lichtmikroskopische Aufnahme eines einseitig beschichteten Trägermaterials 3 nach Aufbringen des ersten Beschichtungsmaterials dargestellt. Die Aufnahmen zeigen die noch unbeschichtete Seite des Trägermaterials 3. Zwischen den Kettfäden 8 und den Schussfäden 9 des Trägermaterials 3 (im Beispiel ein Gewebe) erkennt man Durchlässe 5, die mit Beschichtungsmaterial gefüllt sind, wobei das Beschichtungsmaterial z.T. auch in die Zwickel zwischen den Kettfäden 8 und den Schussfäden 9 des Gewebes eindringt und für eine teilweise Einhüllung der Fäden sorgt. Das die Durchlässe 5 durchdringende Beschichtungsmaterial bildet einen Steg 4 aus, wobei der Steg 4 von der hinter der Betrachtungsebene liegenden Beschichtungslage der ersten Oberfläche des Trägermaterials 3 bis zur dargestellten noch nicht beschichteten zweiten Oberfläche des Trägermaterials 3 reicht. Das Beschichtungsmaterial im Durchlass 5, das den Steg bildet, liegt vorliegend in etwa in der gleichen Ebene wie die Oberflächen der Kettfäden 8 und der Schussfäden 9 in der dargestellten Oberflächenseite des Trägermaterials 3. Bei einer nachfolgenden Beschichtung der zweiten Oberfläche des Trägermaterials 3 (die nicht zu sehen ist), können dann die Beschichtungsmaterialstege 4 mit von der Beschichtung der zweiten Oberfläche des Trägermaterials 3 ausgehenden Stegen 4 in Kontakt kommen, und das Beschichtungsmaterial der ersten Oberfläche des Trägermaterials kann mit dem Beschichtungsmaterial der zweiten Oberfläche so beispielsweise durch Verschmelzen, Vermengen oder Vermischen durchgehende Stege 4 ausbilden.

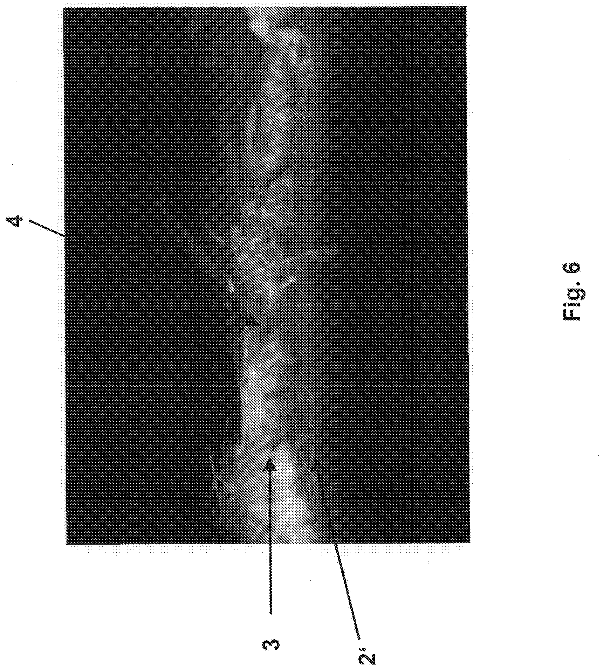

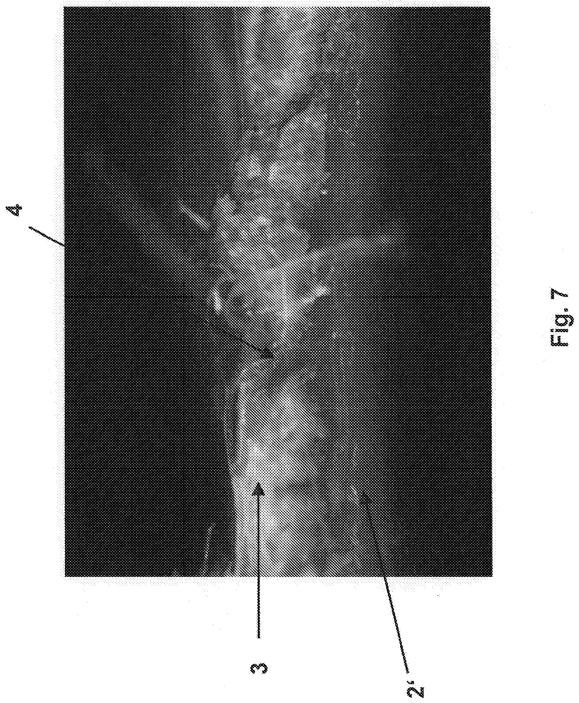

In den Figuren 6 und 7 ist jeweils eine Seitenansicht eines einseitig beschichteten Trägermaterials 3 dargestellt. Eine Beschichtungslage 2' aus Beschichtungsmaterial ist auf einer (zweiten) Oberfläche des Trägermaterials 3 im wesentlichen vollflächig mittels eines Schmelzwalzenkalanders aufgetragen worden. Dabei ist Beschichtungsmaterial in Durchlässe 5 des Trägermaterials 3 beim Beschichtungsvorgang gedrückt worden, so dass dieses Beschichtungsmaterial durch das Trägermaterial 3 hindurch auf die (erste) Oberfläche des Trägermaterials 3 gelangt. Das durch das Trägermaterial 3 hindurchgetretene Beschichtungsmaterial bildet einen Steg 4 innerhalb des Trägermaterials 3 aus. In den Figuren 6 und 7 ist das Beschichtungsmaterial im Wesentlichen vollständig bei der Beschichtung durch das Trägermaterial hindurch gedrückt worden. "Hindurch drücken" bedeutet in diesem Zusammenhang, dass das Beschichtungsmaterial im Wesentlichen senkrecht zur Haupterstreckungsebene der Beschichtungslage durch das Trägermaterial 3 in Richtung der anderen Oberfläche des Trägermaterials 3 gedrückt wird. Anders als in den Figuren 6 und 7 kann das Beschichtungsmaterial aber auch nur zur Hälfte oder nur zu drei Viertel durch das Trägermaterial 3 gedrückt werden. Selbstverständlich kann bei einem Beschichtungsvorgang das Beschichtungsmaterial an verschiedenen Stellen des Trägermaterials 3 auch unterschiedlich tief in dieses hineingedrückt werden. Beispielsweise können 80% der Stege 4 im Wesentlichen vollständig durch das Trägermaterial 3 und 20% der Stege 4 zur Hälfte durch das Trägermaterial 3 gedrückt werden. In einem anderen Beispiel können mindestens 60%, bevorzugter mindestens 80 % und ganz besonders bevorzugt mindestens 90%, dieser Stege 4 im Wesentlichen vollständig durch das Trägermaterial 3 gedrückt werden.

Bevorzugt besteht das Trägermaterial aus einem Gewebe aus einem hochfesten Polyethylen-Garn (z.B. Dyneema der Firma DSM B.V.) und das erste und/oder das zweite Beschichtungsmaterial ist vorzugsweise aus einem metallocenen Plastomer aufgebaut. Durch die Stege aus Beschichtungsmaterial, die innerhalb des Trägermaterials verlaufen, kann vorteilhaft das genannte Gewebe längen- und breitenstabil gehalten werden, weil ein Verkrimpen des Gewebes durch die Stege vermieden wird. Weiterhin vorteilhaft kann das Gewebe aus hochfesten Polyethylen-Garn durch das Vorhandensein der Stege einfach beschichtet werden, da die Stege in das Trägermaterial hineingreifen, beziehungsweise die beiden Beschichtungslagen durch die Stege miteinander verbunden sind und das Trägermaterial "gesandwicht" ist. Bei einem Vorhang beispielsweise, der aus hochfesten Polyethylen-Garnen gewebt wurde und der mit einem Polyolefin wie beispielsweise die zuvor erwähnten, mittels metallocenen Katalysatoren hergestellten Niederdruck-Polyethylen-Copolymere beidseitig und vollflächig beschichtet wurde, kann auch nach mehrmaligem Gebrauch des Vorhangs (beispielsweise die Verschiebung des Vorhangs, um eine Öffnung frei zugeben und zu verschließen) die gleiche Länge des Vorhangs und die gleiche Breite des Vorhangs gemessen werden.

### Beispiel 1:

Als Trägermaterial wurde eine Gewebebahn in einer Breite von 3,2 m vorgelegt. Bei dem Gewebe handelte es sich um ein Polyestergewebe (PES-Gewebe) mit einer offenen Leinwandbindung in Gestalt einer offenen Gitterkonstruktion und einer Gewebeeinstellung von 4,3/4,3 Fd/cm. Die das Gewebe aufbauenden Garne (Diolen®, Fa. Polyester High Performance) hatten eine Feinheit von 1100 dtex sowie eine Garndrehung von Z60/60. Das Gewebe hatte ein Flächengewicht von 108 g/m².

Als Beschichtungsmaterial, mit welchem das PES-Gewebe beschichtet wurde, wurde ein Polypropylen (Hilfax, Typ CA 10A; Fa. Basell) eingesetzt. Es wurden beide Oberflächen des Gewebes mit diesem Beschichtungsmaterial beschichtet.

Die Gewebebahn wurde zur Vorheizung über mehrere beheizte Walzen (T=120°C) vorgeheizt und anschließend kontinuierlich zwischen den Walzen eines Beschichtungskalanders hindurchgeführt und dort mit dem Beschichtungsmaterial beschichtet. Dabei wurde das Beschichtungsmaterial im schmelzeflüssigen Zustand mit einer Temperatur von 185°C auf der Seite der ersten Oberfläche des Gewebes über einen Extruder in den Spalt des Beschichtungskalanders gefördert und dort zu einer Bahn ausgeformt. Die Walzen des Kalanders waren auf eine Temperatur von 145°C bzw. 165°C geheizt. Der Liniendruck im Spalt des Beschichtungskalanders wurde auf ca. 3,5 kN/mm eingestellt. Bei Hindurchlaufen von Gewebe und Beschichtungsmaterialbahn durch den Spalt des Beschichtungskalanders wurde das Gewebe auf seiner ersten Oberfläche mit der Bahn des Polypropylen-Beschichtungsmaterials beschichtet, wobei gleichzeitig das Beschichtungsmaterial in die Gewebestruktur hineingepresst wurde. Die Beschichtungslagen hatten jeweils ein Flächengewicht von 545 g/m², so dass sich ein Gesamtgewicht des resultierenden Verbundwerkstoffs von ca. 1200 g/m² ergab.

Nach Abkühlung des einseitig beschichteten Trägermaterials wurde dieses dem Prozess erneut vorgelegt und entsprechend der zuvor beschriebenen Vorgehensweise bei Hindurchführung durch den Spalt des Beschichtungskalanders auf seiner zweiten Oberfläche mit dem PP-Beschichtungsmaterial beschichtet. Die Beschichtungslagen hatten jeweils ein Flächengewicht von 545 g/m², so dass sich ein Gesamtgewicht des resultierenden Verbundwerkstoffs von ca. 1200 g/m² ergab.

Anschließend wurde das beidseitig beschichtete Gewebe einem Prägevorgang unterzogen. Hierzu wurde das beschichtete Gewebe unter einem Liniendruck von ca. 2,3 kN/mm durch den Spalt eines Prägekalanders geführt, dessen Walzen eine Temperatur von ca. 150°C aufwiesen. Durch den sich an den Beschichtungsvorgang anschließenden Prägevorgang wurde eine Verbesserung des Verbunds erzielt.

Zur Beurteilung der Qualität der Verbindung zwischen Trägermaterial und Beschichtung wurde die Haftfestigkeit des Verbundwerkstoffs untersucht. Der nach Beschichtung im Beschichtungskalander und Prägung im Prägekalander erhaltene Verbundwerkstoff wies eine hohe Haftfestigkeit auf, die größer als 25 N/cm war.

### Beispiel 2:

Es wurde wie in Beispiel 1 vorgegangen. Abweichend von Beispiel 1 wurde als Trägermaterial ein Polyestergewebe mit einer Breite von 80 cm und einem Flächengewicht von 188 g/m² verwendet. Die Bahn dieses Gewebes wurde über mehrere beheizte Walzen auf 70°C vorgeheizt und kontinuierlich dem Beschichtungskalander zugeführt.

Als Beschichtungsmaterial wurde ein Polyethylen-Copolymerisat eingesetzt (Exact Plastomer 8210, Fa. Dexplastomers), welches als Zusatz Flammschutzmittel enthielt. Das Beschichtungsmaterial wurde mit einer Temperatur von 155°C in den Spalt des Beschichtungskalanders gegeben, dort zu einer Bahn ausgeformt und damit jeweils eine der Oberflächen des PES-Gewebes beschichtet. Die Walzen des Beschichtungskalanders wiesen eine Temperatur von 170°C bzw. 180°C auf. Der Liniendruck im Spalt des Beschichtungskalanders betrug beim Aufbringen der Beschichtung auf der ersten Seite des Trägermaterials 2,8 kN/mm und beim Aufbringen der Beschichtung auf der zweiten Seite des Trägermaterials 5,5 kN/mm. Die Beschichtungslagen hatten ein Flächengewicht von 272 g/m² und von 220 g/m², so dass sich ein Gesamtgewicht des resultierenden Verbundwerkstoffs von ca. 680 g/m² ergab.

Anschließend an die Beschichtung wurde das beschichtete Trägermaterial einem Prägevorgang unterzogen. Hierzu wurde das beschichtete Gewebe unter einem Liniendruck von 5,5 kN/mm durch einen Prägekalander geführt, dessen Walzen eine Temperatur von ca. 170°C aufwiesen.

Der nach Beschichtung im Beschichtungskalander und Prägung im Prägekalander erhaltene Verbundwerkstoff wies eine Haftfestigkeit von mehr als 25 N/cm auf.

### Beispiel 3:

Es wurde wie in Beispiel 1 vorgegangen. Abweichend von Beispiel 1 wurde als Trägermaterial ein Gewebe aus hochfesten Polyethylengarnen (Typ Dyneema® SK65, Fa. DSM Dyneema B.V.) mit einer P2/2 Panamabindung, einer Gewebeeinstellung von 6,0/6,0 Fd/cm und einem Flächengewicht von 105 g/m² eingesetzt. Das Gewebe hatte eine Breite von 80 cm. Die Polyethylen-Garne hatten eine Feinheit von 880 dtex sowie eine Garndrehung von 100S/100S. Die Bahn dieses Gewebes wurde über mehrere beheizte Walzen auf 40°C vorgewärmt und kontinuierlich dem Beschichtungskalander zugeführt.

Als Beschichtungsmaterial wurde das Polyethylen-Copolymerisat aus Beispiel 3 eingesetzt (Exact Plastomer 8210, Fa. Dexplastomers), welches mit einem Flammschutzmittel versehen war. Das Beschichtungsmaterial wurde mit einer Temperatur von 180°C in den Spalt des Beschichtungskalanders gegeben, dort zu einer Bahn ausgeformt und damit jeweils eine der Oberflächen des PES-Gewebes beschichtet. Die Walzen des Beschichtungskalanders waren auf eine Temperatur von 170°C bzw. 180°C geheizt. Der Liniendruck im Spalt des Beschichtungskalanders betrug beim Aufbringen der Beschichtung auf der ersten Seite des Trägermaterials 3,2 kN/mm und beim Aufbringen der Beschichtung auf der zweiten Seite des Trägermaterials 5,5 kN/mm. Die Beschichtungslagen hatten ein Flächengewicht von 395 g/m² und von 400 g/m², so dass sich ein Gesamtgewicht des resultierenden Verbundwerkstoffs von 900 g/m² ergab.

An die Beschichtung schloss sich ein Prägevorgang an, in dem das beschichtete Trägermaterial durch einen Prägekalander unter Druck und erhöhter Temperatur geführt wurde. Der Liniendruck im Prägekalander betrug 5,5 kN/mm, die Walzen des Prägekalanders wiesen eine Temperatur von ca. 170°C auf.

Der nach Beschichtung im Beschichtungskalander und Prägung im Prägekalander erhaltene Verbundwerkstoff wies eine Haftfestigkeit von mehr als 25 N/cm auf.

### Beispiel 4:

Es wurde wie in Beispiel 3 vorgegangen. Abweichend von Beispiel 4 wurde als Trägermaterial ein Gewebe aus hochfesten Polyethylengarnen (Typ Dyneema® SK65, Fa. DSM Dyneema B.V.) mit einer Breite von 80 cm und einem Flächengewicht von 193 g/m² eingesetzt. Die Bahn dieses Gewebes wurde über mehrere beheizte Walzen auf 90°C vorgeheizt und kontinuierlich dem Beschichtungskalander zugeführt.

Als Beschichtungsmaterial wurde das Polyethylen-Copolymerisat Exact Plastomer 0203 (Fa. Dexplastomers) verwendet, welches ebenfalls mit einem Flammschutzmittel versehen war. Das Beschichtungsmaterial wurde mit einer Temperatur von 155°C in den Spalt des Beschichtungskalanders gegeben, dort zu einer Bahn ausgeformt und damit jeweils eine der Oberflächen des PES-Gewebes beschichtet. Die Walzen des Beschichtungskalanders waren auf eine Temperatur von 117°C bzw. 127°C geheizt. Der Liniendruck im Spalt des Beschichtungskalanders betrug ca. 3,2 kN/mm. Die Beschichtungslagen hatten ein Flächengewicht von 150 g/m² und von 187 g/m², so dass sich ein Gesamtgewicht des resultierenden Verbundwerkstoffs von 530 g/m² ergab.

An die Beschichtung schloss sich ein Prägevorgang an, in dem das beschichtete Trägermaterial durch einen Prägekalander unter Druck und erhöhter Temperatur geführt wurde. Der Druck im Prägekalander betrug ebenfalls ca. 3,2 kN/mm, die Walzen des Prägekalanders wiesen eine Temperatur von ca. 120°C auf.

Der nach Beschichtung im Beschichtungskalander und Prägung im Prägekalander erhaltene Verbundwerkstoff wies eine Haftfestigkeit von ca. 20 N/cm auf.

### Bezugszeichen

- 1: Verbundwerkstoff
- 2: erste Beschichtungslage
- 2': zweite Beschichtungslage
- 3: Trägermaterial
- 4: Steg
- 5: Durchlass
- 6: zweite Schutzschicht
- 7: erste Schutzschicht
- 8: Kettfäden des Trägermaterials 3
- 9: Schussfäden des Trägermaterials 3

## Patentansprüche

1. Verbundwerkstoff (1), mindestens bestehend aus einem Trägermaterial (3), wobei das Trägermaterial (3) auf einer ersten Oberfläche mit einem ersten Beschichtungsmaterial (2) und auf einer zweiten Oberfläche mit einem zweiten Beschichtungsmaterial (2') beschichtet ist, wobei der Verbundwerkstoff Stege (4) aus Beschichtungsmaterial (2, 2') aufweist, die von der ersten Oberfläche des Trägermaterials (3) zur zweiten Oberfläche des Trägermaterials (3) verlaufen, wobei mindestens 20% und bis zu 90% der Stege so ausgebildet sind, dass sie von der ersten Oberfläche des Trägermaterials zur zweiten Oberfläche des Trägermaterials reichen, und wobei eine Ausgangsfläche der Stege (4), die von der ersten Oberfläche des Trägermaterials (3) ausgeht, 1 % bis 90 % der Fläche der ersten Oberfläche ausmacht und dass der Verbundwerkstoff (1) frei von Klebemitteln oder Haftvermittlern ist.

2. Verbundwerkstoff (1) nach Anspruch 1, wobei eine Ausgangsfläche der Stege (4), die von der ersten Oberfläche des Trägermaterials (3) ausgeht, 5% bis 70 % der Fläche der ersten Oberfläche ausmacht.

3. Verbundwerkstoff (1) nach Anspruch 1, wobei eine Ausgangsfläche der Stege (4), die von der ersten Oberfläche des Trägermaterials (3) ausgeht, 10 % bis 50 % der Fläche der ersten Oberfläche ausmacht.

4. Verbundwerkstoff (1) nach Anspruch 1, wobei eine Ausgangsfläche der Stege (4), die von der ersten Oberfläche des Trägermaterials (3) ausgeht, 25 % bis 40 % der Fläche der ersten Oberfläche ausmacht.

5. Verbundwerkstoff (1) nach einem oder mehreren der Ansprüche 1 bis 4, wobei das Trägermaterial (3) mindestens aus einem Gewebe, einem Gewirk, einem Gedrebe, einem Gitter oder einem Vlies besteht.

6. Verbundwerkstoff (1) nach einem oder mehreren der Ansprüche 1 bis 5, wobei das erste Beschichtungsmaterial (2) und das zweite Beschichtungsmaterial (2') das gleiche Material sind.

7. Verbundwerkstoff (1) nach einem oder mehreren der Ansprüche 1 bis 6, wobei die Stege (4) aus Beschichtungsmaterial (2, 2') an Durchlässen 85) des Trägermaterials (3) ausgebildet sind.

8. Verbundwerkstoff (1) nach einem oder mehreren der Ansprüche 1 bis 7, wobei das Trägermaterial (3) Fasern aus Polyethylen aufweist.

9. Verbundwerkstoff (1) nach einem oder mehreren der Ansprüche 1 bis 8, wobei das erste (2) und/oder das zweite Beschichtungsmaterial (2') ein Polyolefin-Homopolymer oder ein Polyolefin-Copolymer ist.

10. Verfahren zur kontinuierlichen Herstellung eines Verbundwerkstoffes (1) umfassend die Verfahrensschritte:
- Vorlegen eines bahnförmigen Trägermaterials (3) in einer Schmelzwalzenkalanderanordnung, umfassend zumindest einen ersten Beschichtungskalander,
- Vorlegen eines ersten Beschichtungsmaterials (2) und Überführen des ersten Beschichtungsmaterials bei einer Temperatur oberhalb seiner Erweichungstemperatur in einen schmelzeflüssigen Zustand,
- Erzeugen einer schmelzeflüssigen Bahn des ersten Beschichtungsmaterials (2),
- Hindurchführen der Bahn des ersten Beschichtungsmaterials (2) im schmelzeflüssigen Zustand zusammen mit dem bahnförmigen Trägermaterial und auf der ersten Oberfläche des Trägermaterials (3) durch den Spalt des ersten Beschichtungskalanders, wodurch das erste Beschichtungsmaterial (2) auf der ersten Oberfläche des Trägermaterials (3) aufgetragen wird und infolge des im Spalt des ersten Beschichtungskalanders ausgeübten Drucks das erste Beschichtungsmaterial (2) und das Trägermaterial eine innige Verbindung eingehen,
- Vorlegen eines zweiten Beschichtungsmaterials (2') und Überführen des zweiten Beschichtungsmaterials (2') bei einer Temperatur oberhalb seiner Erweichungstemperatur in einen schmelzeflüssigen Zustand,
- Erzeugen einer schmelzeflüssigen Bahn des zweiten Beschichtungsmaterials (2'),
- Hindurchführen der Bahn des zweiten Beschichtungsmaterials (2') im schmelzeflüssigen Zustand zusammen mit dem bahnförmigen Trägermaterial (3) und auf der zweiten Oberfläche des Trägermaterials (3) durch den Spalt eines zweiten Beschichtungskalanders, wodurch das zweite Beschichtungsmaterial (2') auf der zweiten Oberfläche des Trägermaterials aufgetragen wird und infolge des im Spalt des zweiten Beschichtungskalanders ausgeübten Drucks das zweite Beschichtungsmaterial (2') und das Trägermaterial (3) eine innige Verbindung eingehen,
wobei die Temperatur des ersten Beschichtungsmaterials (2) und/oder des zweiten Beschichtungsmaterials (2') und der Druck im Spalt des ersten und/oder zweiten Beschichtungskalanders so eingestellt werden, dass das erste Beschichtungsmaterial (2) und/oder das zweite Beschichtungsmaterial (2') von der einen Oberfläche des Trägermaterials (3) zur anderen Oberfläche des Trägermaterials (3) durch das Trägermaterial (3) fließt und dabei Stege (4) innerhalb des Trägermaterials (3) ausgebildet werden, wobei mindestens 20% und bis zu 90% der Stege so ausgebildet sind, dass sie von der ersten Oberfläche des Trägermaterials zur zweiten Oberfläche des Trägermaterials reichen und eine Ausgangsfläche der Stege gebildet wird, die von der ersten Oberfläche des Trägermaterials (3) ausgehen, wobei die Ausgangsfläche 1 bis 90 % der Fläche der ersten Oberfläche ausmacht.

11. Verfahren zur Herstellung eines Verbundwerkstoffes (1) nach Anspruch 10, **dadurch gekennzeichnet, dass** das bahnförmige Trägermaterial (3) in einer Breite im Bereich von 0,5 bis 3,5 m vorgelegt wird und über mindestens 95% seiner Breite gleichmäßig mit den ersten (2) und dem zweiten Beschichtungsmaterial (2') beschichtet wird.

12. Verfahren zur Herstellung eines Verbundwerkstoffes (1) nach Anspruch 10 oder 11, **dadurch gekennzeichnet, dass** im Spalt des ersten bzw. des zweiten Beschichtungskalanders ein Liniendruck von mindestens 1,5 kN/mm eingestellt wird.

13. Verfahren zur Herstellung eines Verbundwerkstoffes (1) nach einem oder mehreren der Ansprüche 10 bis 12, **dadurch gekennzeichnet, dass** der erste Beschichtungskalander und der zweite Beschichtungskalander identisch sind und das bahnförmige Trägermaterial (3) zunächst zusammen mit der Bahn des ersten Beschichtungsmaterials (2) durch den Spalt des einzigen Beschichtungskalanders hindurchgeführt wird, wodurch das erste Beschichtungsmaterial (2) auf der ersten Oberfläche des Trägermaterials (3) aufgetragen wird, und in einem nachfolgenden Schritt des Verfahrens das mit dem ersten Beschichtungsmaterial (2) beschichtete bahnförmige Trägermaterial (3) zusammen mit der Bahn des zweiten Beschichtungsmaterials (2') durch den Spalt des einzigen Beschichtungskalanders hindurchgeführt wird, wodurch das zweite Beschichtungsmaterial (2') auf der zweiten Oberfläche des Trägermaterials (3) aufgetragen wird.

14. Verfahren zur Herstellung eines Verbundwerkstoffes (1) nach einem oder mehreren der Ansprüche 10 bis 13, **dadurch gekennzeichnet, dass** das erste (2) bzw. zweite Beschichtungsmaterial (2') bei der Zusammenführung mit dem bahnförmigen Trägermaterial (3) eine Temperatur aufweist, die im Bereich von 20 bis 150 °C oberhalb der Erweichungstemperatur des ersten (2) bzw. des zweiten Beschichtungsmaterials (2') liegt, wobei die Temperatur gleichzeitig unterhalb der Zersetzungstemperatur des ersten (2) bzw. des zweiten Beschichtungsmaterials (2') liegt.

15. Verfahren zur Herstellung eines Verbundwerkstoffes (1) nach einem oder mehreren der Ansprüche 10 bis 13, wobei als erstes (2) und/oder zweites Beschichtungsmaterial (2') ein Polyolefin-Homopolymer oder ein Polyolefin-Copolymer verwendet wird und die Temperatur des ersten (2) und/oder des zweiten Beschichtungsmaterials (2') beim Kalandrieren in dem Bereich von 140 °C bis 220 °C liegt.

16. Verfahren zur Herstellung eines Verbundwerkstoffes (1) nach einem mehreren der Ansprüche 10 bis 15, wobei nach Beschichtung der ersten und/oder der zweiten Oberfläche des Trägermaterials (3) der Verbundwerkstoff (1) einem Prägevorgang unterzogen wird.

17. Verfahren nach Anspruch 16, wobei die Temperatur beim Prägevorgang 20 bis 150 °C oberhalb der Erweichungstemperatur des ersten (2) bzw. des zweiten Beschichtungsmaterials (2') wobei die Temperatur gleichzeitig unterhalb der Zersetzungstemperatur des ersten (2) bzw. des zweiten Beschichtungsmaterials (2') liegt.

18. Verfahren nach Anspruch 16 oder 17, wobei der Prägevorgang in einem Prägekalander durchgeführt wird und im Spalt des Prägekalanders ein Liniendruck im Bereich von mindestens 1,5 kN/mm eingestellt wird.

19. Verwendung eines Verbundwerkstoffes (1) nach einem oder mehreren der Ansprüche 1 bis 9 als Behälter für Lebensmittel, Ölsperre, Ölbehälter, textile Architektur, textiles Bauen oder industrielle Anwendungen.

## Claims

1. Composite material (1), at least consisting of a carrier material (3), wherein the carrier material (3) is coated on a first surface with a first coating material (2) and on a second surface with a second coating material (2'), wherein the composite material has links (4) of coating material (2, 2') which run from the first surface of the carrier material (3) to the second surface of the carrier material (3), wherein at least 20% and up to 90% of the links are formed such that they extend from the first surface of the carrier material to the second surface of the carrier material, and wherein a starting surface of the links (4) which starts from the first surface of the carrier material (3) occupies 1% to 90% of the area of the first surface and that the composite material (1) is free of adhesive agents or adhesion promoters.

2. Composite material (1) according to claim 1, wherein a starting surface of the links (4) which starts from the first surface of the carrier material (3) occupies 5% to 70% of the area of the first surface.

3. Composite material (1) according to claim 1, wherein a starting surface of the links (4) which starts from the first surface of the carrier material (3) occupies 10% to 50% of the area of the first surface.

4. Composite material (1) according to claim 1, wherein a starting surface of the links (4) which starts from the first surface of the carrier material (3) occupies 25% to 40% of the area of the first surface.

5. Composite material (1) according to one or several of claims 1 to 4, wherein the carrier material (3) consists at least of a woven fabric, a knitted fabric, a leno fabric, a mesh or a nonwoven.

6. Composite material (1) according to one or several of claims 1 to 5, wherein the first coating material (2) and the second coating material (2') are the same material.

7. Composite material (1) according to one or several of claims 1 to 6, wherein the links (4) of coating material (2, 2') are formed at apertures 85) of the carrier material (3).

8. Composite material (1) according to one or several of claims 1 to 7, wherein the carrier material (3) has fibres of polyethylene.

9. Composite material (1) according to one or several of claims 1 to 8, wherein the first (2) and/or the second coating material (2') is a polyolefin homopolymer or a polyolefin copolymer.

10. Method for the continuous manufacture of a composite material (1) comprising the method steps:
- laying a ribbon-shaped carrier material (3) in a melt roll calender arrangement, comprising at least one first coating calender,
- laying a first coating material (2) and transforming the first coating material into a molten state at a temperature above its softening temperature,
- generating a molten ribbon of the first coating material (2),
- guiding the ribbon of the first coating material (2) in the molten state together with the ribbon-shaped carrier material and on the first surface of the carrier material (3) through the nip of the first coating calender, as a result of which the first coating material (2) is applied to the first surface of the carrier material (3) and as a result of the pressure exerted in the nip of the first coating calender the first coating material (2) and the carrier material enter upon a close connection,
- laying a second coating material (2') and transforming the second coating material (2') into a molten state at a temperature above its softening temperature,
- generating a molten ribbon of the second coating material (2'),
- guiding the ribbon of the second coating material (2') in the molten state together with the ribbon-shaped carrier material (3) and on the second surface of the carrier material (3) through the nip of a second coating calender, as a result of which the second coating material (2') is applied to the second surface of the carrier material and as a result of the pressure exerted in the nip of the second coating calender the second coating material (2') and the carrier material (3) enter upon a close connection,
wherein the temperature of the first coating material (2) and/or of the second coating material (2') and the pressure in the nip of the first and/or second coating calender are set such that the first coating material (2) and/or the second coating material (2') flows through the carrier material (3) from the one surface of the carrier material (3) to the other surface of carrier material (3) and thereby links (4) are formed within the carrier material (3), wherein at least 20% and up to 90% of the links are formed such that they run from the first surface of the carrier material to the second surface of the carrier material and a starting surface of the links is formed, which start from the first surface of the carrier material (3), wherein the starting surface occupies 1 to 90% of the area of the first surface.

11. Method for the manufacture of a composite material (1) according to claim 10, **characterised in that** the ribbon-shaped carrier material (3) is laid in a width in the range from 0.5 to 3.5 m and across at least 95% of its width is coated evenly with the first (2) and the second coating material (2').

12. Method for the manufacture of a composite material (1) according to claim 10 or 11, **characterised in that** in the nip of the first or of the second coating calender a linear pressure of at least 1.5 kN/mm is set.

13. Method for the manufacture of a composite material (1) according to one or several of claims 10 to 12, **characterised in that** the first coating calender and the second coating calender are identical and the ribbon-shaped carrier material (3) is guided first together with the ribbon of the first coating material (2) through the nip of the single coating calender, as a result of which the first coating material (2) is applied on the first surface of the carrier material (3), and in a subsequent step of the method the ribbon-shaped carrier material (3) coated with the first coating material (2) is guided together with the ribbon of the second coating material (2') through the nip of the single coating calender, as a result of which the second coating material (2') is applied on the second surface of the carrier material (3).

14. Method for the manufacture of a composite material (1) according to one or several of claims 10 to 13, **characterised in that** the first (2) or second coating material (2') at the combining with the ribbon-shaped carrier material (3) has a temperature which lies in the range from 20 to 150°C above the softening temperature of the first (2) or of the second coating material (2'), wherein the temperature at the same time lies below the degradation temperature of the first (2) or of the second coating material (2').

15. Method for the manufacture of a composite material (1) according to one or several of claims 10 to 13, wherein a polyolefin homopolymer or a polyolefin copolymer is used as a first (2) and/or second coating material (2') and the temperature of the first (2) and/or of the second coating material (2') during calendering is in the range from 140°C to 220°C.

16. Method for the manufacture of a composite material (1) according to one several of claims 10 to 15, wherein after coating of the first and/or the second surface of the carrier material (3) the composite material (1) is subjected to an embossing step.

17. Method according to claim 16, wherein the temperature at the embossing step is 20 to 150°C above the softening temperature of the first (2) or of the second coating material (2') wherein the temperature is at the same time below the degradation temperature of the first (2) or of the second coating material (2').

18. Method according to claim 16 or 17, wherein the embossing step is carried out in an embossing calender and in the nip of the embossing calender a linear pressure is set in the region of at least 1.5 kN/mm.

19. Use of a composite material (1) according to one or several of claims 1 to 9 as container for foods, oil booms, oil containers, textile architecture, textile construction or industrial applications.

## Revendications

1. Matériau composite (1), au moins constitué d'un matériau de support (3), dans lequel le matériau de support (3) est enduit d'un premier matériau d'enduction (2) sur une première surface et d'un second matériau d'enduction (2') sur une seconde surface, dans lequel le matériau composite présente des traverses (4) en matériau d'enduction (2, 2') allant de la première surface du matériau de support (3) jusqu'à la seconde surface du matériau de support (3), dans lequel au moins 20 % et jusqu'à 90 % des traverses sont formées de sorte qu'elles s'étendent de la première surface du matériau de support jusqu'à la seconde surface du matériau de support, et dans lequel une surface d'émergence des traverses (4), qui émerge de la première surface du matériau de support (3), représente entre 1 % et 90 % de la surface de la première surface, et le matériau composite (1) est exempt d'adhésifs ou de promoteurs d'adhérence.

2. Matériau composite (1) selon la revendication 1, dans lequel une surface d'émergence des traverses (4), qui émerge de la première surface du matériau de support (3), représente entre 5 % et 70 % de la surface de la première surface.

3. Matériau composite (1) selon la revendication 1, dans lequel une surface d'émergence des traverses (4), qui émerge de la première surface du matériau de support (3), représente entre 10 % et 50 % de la surface de la première surface.

4. Matériau composite (1) selon la revendication 1, dans lequel une surface d'émergence des traverses (4), qui émerge de la première surface du matériau de support (3), représente entre 25 % et 40 % de la surface de la première surface.

5. Matériau composite (1) selon l'une quelconque ou plusieurs des revendications 1 à 4, dans lequel le matériau de support (3) est constitué au moins d'un tissu, d'un tricot, d'une gaze, d'un canevas ou d'un voile.

6. Matériau composite (1) selon l'une quelconque ou plusieurs des revendications 1 à 5, dans lequel le premier matériau d'enduction (2) et le second matériau d'enduction (2') sont un même matériau.

7. Matériau composite (1) selon l'une quelconque ou plusieurs des revendications 1 à 6, dans lequel les traverses (4) en matériau d'enduction (2, 2') sont formées au niveau de passages 85) du matériau de support (3).

8. Matériau composite (1) selon l'une quelconque ou plusieurs des revendications 1 à 7, dans lequel le matériau de support (3) présente des fibres en polyéthylène.

9. Matériau composite (1) selon l'une quelconque ou plusieurs des revendications 1 à 8, dans lequel le premier matériau d'enduction (2) et/ou le second matériau d'enduction (2') est un homopolymère polyoléfinique ou un copolymère polyoléfinique.

10. Procédé de production en continu d'un matériau composite (1), comprenant les étapes de procédé consistant à :
- fournir un matériau de support (3) en forme de feuille au sein d'un agencement de calandrage à chaud, comprenant au moins une première calandre d'enduction,
- fournir un premier matériau d'enduction (2) et amener le premier matériau d'enduction à un état de fusion liquide à une température supérieure à sa température de ramollissement,
- créer une feuille à l'état de fusion liquide du premier matériau d'enduction (2),
- faire passer la feuille du premier matériau d'enduction (2) à l'état de fusion liquide à travers l'entrefer de la première calandre d'enduction, en même temps que le matériau de support en forme de feuille et sur la première surface du matériau de support (3), ce qui permet d'appliquer le premier matériau d'enduction (2) sur la première surface du matériau de support (3) et de former une liaison intime entre le premier matériau d'enduction (2) et le matériau de support du fait de la pression exercée au sein de l'entrefer de la première calandre d'enduction,
- fournir un second matériau d'enduction (2') et amener le second matériau d'enduction (2') à un état de fusion liquide à une température supérieure à sa température de ramollissement,
- créer une feuille à l'état de fusion liquide du second matériau d'enduction (2'),
- faire passer la feuille du second matériau d'enduction (2') à l'état de fusion liquide à travers l'entrefer d'une seconde calandre d'enduction, en même temps que le matériau de support (3) en forme de feuille et sur la seconde surface du matériau de support (3), ce qui permet d'appliquer le second matériau d'enduction (2') sur la seconde surface du matériau de support et de former une liaison intime entre le second matériau d'enduction (2') et le matériau de support (3) du fait de la pression exercée au sein de l'entrefer de la seconde calandre d'enduction,
dans lequel la température du premier matériau d'enduction (2) et/ou du second matériau d'enduction (2') et la pression au sein de l'entrefer de la première et/ou de la seconde calandre d'enduction sont ajustées de sorte que le premier matériau d'enduction (2) et/ou le second matériau d'enduction (2') s'écoulent à travers le matériau de support (3) à partir d'une surface du matériau de support (3) vers l'autre surface du matériau de support (3) et que des traverses (4) sont en outre formées à l'intérieur du matériau de support (3), dans lequel au moins 20 % et jusqu'à 90 % des traverses sont formées de sorte qu'elles s'étendent de la première surface du matériau de support jusqu'à la seconde surface du matériau de support et qu'une surface d'émergence des traverses émergeant de la première surface du matériau de support (3) est formée, dans lequel la surface d'émergence représente entre 1 et 90 % de la surface de la première surface.

11. Procédé de production d'un matériau composite (1) selon la revendication 10, **caractérisé en ce que** le matériau de support (3) en forme de feuille est fourni avec une largeur se situant dans la plage comprise entre 0,5 et 3,5 m et est enduit de manière uniforme sur au moins 95 % de sa largeur avec le premier matériau d'enduction (2) et le second matériau d'enduction (2').

12. Procédé de production d'un matériau composite (1) selon la revendication 10 ou 11, **caractérisé en ce qu'**une pression linéaire d'au moins 1,5 kN/mm est ajustée au sein de l'entrefer de la première ou de la seconde calandre d'enduction.

13. Procédé de production d'un matériau composite (1) selon l'une quelconque ou plusieurs des revendications 10 à 12, **caractérisé en ce que** la première calandre d'enduction et la seconde calandre d'enduction sont identiques et le matériau de support (3) en forme de feuille est d'abord passé à travers l'entrefer de la calandre d'enduction unique en même temps que la feuille du premier matériau d'enduction (2), ce qui permet d'appliquer le premier matériau d'enduction (2) sur la première surface du matériau de support (3), et, dans une étape ultérieure du procédé, le matériau de support (3) en forme de feuille enduit avec le premier matériau d'enduction (2) est passé à travers l'entrefer de la calandre d'enduction unique en même temps que la feuille du second matériau d'enduction (2'), ce qui permet d'appliquer le second matériau d'enduction (2') sur la seconde surface du matériau de support (3).

14. Procédé de fabrication d'un matériau composite (1) selon l'une quelconque ou plusieurs des revendications 10 à 13, **caractérisé en ce que** le premier matériau d'enduction (2) ou le second matériau d'enduction (2') présente, lors du passage en commun avec le matériau de support (3) en forme de feuille, une température qui se situe dans la plage comprise entre 20 et 150°C au-dessus de la température de ramollissement du premier matériau d'enduction (2) ou du second matériau d'enduction (2'), dans lequel la température est simultanément inférieure à la température de décomposition du premier matériau d'enduction (2) ou du second matériau d'enduction (2').

15. Procédé de production d'un matériau composite (1) selon l'une quelconque ou plusieurs des revendications 10 à 13, dans lequel un homopolymère polyoléfinique ou un copolymère polyoléfinique est utilisé comme premier matériau d'enduction (2) et/ou second matériau d'enduction (2') et la température du premier matériau d'enduction (2) et/ou du second matériau d'enduction (2') se situe dans la plage comprise entre 140°C et 220°C lors du calandrage.

16. Procédé de production d'un matériau composite (1) selon l'une quelconque plusieurs des revendications 10 à 15, dans lequel le matériau composite (1) est soumis à un procédé de gaufrage après enduction de la première et/ou de la seconde surface du matériau de support (3).

17. Procédé selon la revendication 16, dans lequel la température pendant le procédé de gaufrage est de 20 à 150°C supérieure à la température de ramollissement du premier matériau d'enduction (2) ou du second matériau d'enduction (2'), dans lequel la température est simultanément inférieure à la température de décomposition du premier matériau d'enduction (2) ou du second matériau d'enduction (2').

18. Procédé selon la revendication 16 ou 17, dans lequel le procédé de gaufrage est mis en œuvre dans une calandre de gaufrage et une pression linéaire d'au moins 1,5 kN/mm est ajustée au sein de l'entrefer de la calandre de gaufrage.

19. Utilisation d'un matériau composite (1) selon l'une quelconque ou plusieurs des revendications 1 à 9 comme récipient pour aliments, barrage pour huiles, bac à huile, architecture textile, construction textile ou applications industrielles.
